(19) Europäisches Patentamt
European Patent Office
Office européen des brevets

(11) **EP 2 337 128 A1**

(12) **EUROPEAN PATENT APPLICATION**
published in accordance with Art. 153(4) EPC

(43) Date of publication:
**22.06.2011 Bulletin 2011/25**

(51) Int Cl.:
*H01M 4/86* (2006.01)   *H01M 4/88* (2006.01)
*H01M 4/96* (2006.01)   *H01M 8/10* (2006.01)

(21) Application number: **09816229.0**

(22) Date of filing: **16.09.2009**

(86) International application number:
**PCT/JP2009/066716**

(87) International publication number:
**WO 2010/035815 (01.04.2010 Gazette 2010/13)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **26.09.2008 JP 2008247729**
**22.06.2009 JP 2009148052**

(71) Applicants:
• **Nissan Motor Co., Ltd.
Kanagawa 221-0023 (JP)**

• **University of Yamanashi
Yamanashi 400-8510 (JP)**

(72) Inventors:
• **WAKI, Norihisa
Kanagawa 243-0123 (JP)**
• **FURUYA, Nagakazu
Yamanashi 400-8510 (JP)**

(74) Representative: **Schaeberle, Steffen et al
Hoefer & Partner
Patentanwälte
Pilgersheimer Strasse 20
81543 München (DE)**

(54) **GAS DIFFUSION LAYER FOR FUEL CELL**

(57)  A gas diffusion layer (10) for a fuel cell includes a conductive microparticle layer (2) and a base material layer (1). The conductive microparticle layer (2) is formed with first pores (3) of no less than 0.5 $\mu$m and no more than 50 $\mu$m and second pores (4) of no less than 0.05 $\mu$m and less than 0.5 $\mu$m. Pores (11) are also formed in the base material layer (1). A total volume of the second pores (4) is no less than 50% and less than 100% of a total volume of all of the pores in the conductive microparticle layer (2). By setting a pore size *D1* of pores having a maximum volume ratio from among the first pores 3 such that a capillary force *F1* acting on the first pores 3 is smaller than a capillary force *F2* acting on the pores (11) in the base material layer (1), water passages are formed in the first pores (3) separately from gas passages formed in the second pores (4).

FIG. 1

EP 2 337 128 A1

**Description**

TECHNICAL FIELD OF THE INVENTION

This invention relates to an improvement in a drainage characteristic of a gas diffusion layer for a fuel cell.

BACKGROUND OF THE INVENTION

JP2001-057215A, published by the Japan Patent Office in 2001, proposes a gas diffusion layer for improving the drainage characteristic of an electrode layer of a fuel cell. In this prior art, a porous carbon layer is formed in the gas diffusion layer. The carbon layer is formed by mixing together large diameter carbon particles and small diameter carbon particles such that large diameter pores and small diameter pores are formed between the carbon particles.
A larger capillary force is exerted on the small diameter pores than on the large diameter pores. Therefore, by implementing water repellency treatment on the large diameter pores but not implementing water repellency treatment on the small diameter pores, liquid phase water gathers in the small diameter pores: When liquid phase water gathers in the small diameter pores, the small diameter pores function as water passages and the large diameter pores function as gas passages. The prior art attempts to improve the drainage characteristic of the electrode layer by thus separating the liquid phase water passages from the gas passages.

SUMMARY OF THE INVENTION

The carbon layer formed in the gas diffusion layer of the prior art is constituted by hydrophobic carbon and therefore exhibits water repellency even in an untreated state. In addition, water-repellent polytetrafluoroethylene (PTFE) microparticles are used as a binder for forming the carbon layer, and therefore, even in a case where the carbon layer is constituted by hydrophilic carbon black, a surface of the carbon layer remains water-repellent.
Meanwhile, even when water repellency treatment is implemented on the large diameter pores, a pressure required for water to infiltrate the large diameter pores does not increase significantly. In other words, with water repellency treatment alone, it is difficult to cause water to gather in the small diameter pores while preventing water from infiltrating the large diameter pores.
Further, when the carbon layer is formed by mixing together carbon particles having a large particle diameter and carbon particles having a small particle diameter, the carbon particles having a small particle diameter block the large diameter pores, and it is therefore difficult to provide two types of pores in the carbon layer.
It is therefore an object of this invention to realize a new structure for separating water passages from gas passages in a gas diffusion layer.
As a result of committed research, the inventors discovered that the above object can be achieved in a gas diffusion layer in which a conductive microparticle layer is provided on a base material layer by adjusting a pore size distribution and a capillary force of pores in the conductive microparticle layer and a capillary force of the base material layer. Thus, the inventors arrived at this invention.
A gas diffusion layer for a fuel cell according to this invention includes a conductive microparticle layer and a base material layer that are laminated together. The base material layer comprises a plurality of pores penetrating the base material layer in a lamination direction, and the conductive microparticle layer comprises a plurality of first pores and a plurality of second pores penetrating the conductive microparticle layer in the lamination direction. The first pores exist within a first pore size range of no less than 0.5 micrometers ($\mu$m) and no more than $50\mu$m. The second pores exist within a second pore size range of no less than $0.05\mu$m and less than $0.5\mu$m. A total volume of the second pores is no less than 50 percent (%) and less than 100% of a total volume of all of the pores in the conductive microparticle layer.
Further, a pore size $D1$ of pores having a maximum volume ratio from among the first pores satisfies relationships of a following equation (A), a following equation (B), and a following equation (C):

$$F1 = 4 \cdot \gamma \cdot \cos \theta_1 / D1 \qquad (A)$$

$$F2 = 4 \cdot \gamma \cdot \cos \theta_2 / D2 \qquad (B)$$

$$F1 < F2 \qquad\qquad (C)$$

where,

F1 = a capillary force acting on the pore having the maximum volume ratio from among the first pores
F2 = a capillary force acting on the pore having the maximum volume ratio from among the pores in the base material layer,
$\gamma$ = a surface tension of water,
$\theta_1$, = a contact angle between the conductive microparticle layer and water,
$\theta_2$ = a contact angle between the base material layer and water,
D1 = a pore size of the pore having a maximum volume ratio from among the first pores, and
D2 = a pore size of the pore having a maximum volume ratio from among the pores in the base material layer.

A further object of this invention is to provide a new method of forming large diameter pores and small diameter pores in a gas diffusion layer.

To achieve the further object of this invention, the inventors invented a manufacturing method for a gas diffusion layer having a conductive microparticle layer and a base material layer. The manufacturing method includes a first step for mixing together and baking carbon particles and binder particles to obtain a sintered body of the carbon particles and the binder particles, a second step for pulverizing the sintered body to obtain a powder, a third step for processing the powder into a sheet form to obtain the conductive microparticle layer, and a fourth step for joining the conductive microparticle layer to the base material layer.

The details as well as other features and advantages of this invention are set forth in the remainder of the specification and are shown in the accompanying drawings.

BRIEF DESCRIPTION OF THE DRAWINGS

FIG. 1 is a schematic longitudinal sectional view of a gas diffusion layer according to this invention.
FIG. 2 is a schematic longitudinal sectional view of a membrane electrode assembly including the gas diffusion layer.
FIG. 3 is a schematic longitudinal sectional view of a conductive microparticle layer, illustrating a contact angle of a water drop.
FIG. 4 is a plan view of clusters of conductive microparticles and binder particles constituting the conductive microparticle layer and large diameter pores formed between the clusters.
FIG. 5 is a plan view of small diameter pores formed between the conductive microparticles and the binder particles, or between the conductive microparticles, or between the binder particles.
FIG. 6 is a flow diagram illustrating a manufacturing method for the gas diffusion layer according to this invention.
FIG. 7 is a longitudinal sectional view of a polymer electrolyte fuel cell including the gas diffusion layer according to this invention.
FIG. 8 is a photograph taken by a scanning electron microscope (SEM) and showing a cross-section of a conductive microparticle layer obtained in a first example.
FIG. 9 is a diagram showing a result obtained when a pore distribution of the conductive microparticle layer obtained in the first example is measured by a Perm-Porometer, manufactured by U.S. firm PMI, in accordance with American Society for Testing and Materials (ASTM) F316-86.
FIG. 10 is similar to FIG. 9, but shows the pore distribution of a conductive microparticle layer according to a second example.
FIG. 11 is similar to FIG. 9, but shows the pore distribution of a conductive microparticle layer according to a third example.
FIG. 12 is similar to FIG. 9, but shows the pore distribution of a conductive microparticle layer according to a fourth example.
FIG. 13 is similar to FIG. 9, but shows the pore distribution of a conductive microparticle layer according to a fifth example.
FIG. 14 is similar to FIG. 9, but shows the pore distribution of a conductive microparticle layer obtained in a first comparative example.
FIG. 15 is similar to FIG. 9, but shows the pore distribution of a conductive microparticle layer obtained in a second comparative example.

FIG. 16 is similar to FIG. 9, but shows the pore distribution of a conductive microparticle layer obtained in a third comparative example.

FIG. 17 is a diagram showing a result obtained when a pore distribution of a base material layer obtained in the first example is measured by a Perm-Porometer, manufactured by U.S. firm PMI, in accordance with American Society for Testing and Materials (ASTM) F316-86.

FIG. 18 is a diagram showing a power generation evaluation result obtained in the first example.

FIG. 19 is similar to FIG. 18, but shows the second example.

FIG. 20 is similar to FIG. 18, but shows the third example.

FIG. 21 is similar to FIG. 18, but shows the fourth example.

FIG. 22 is similar to FIG. 18, but shows the fifth example.

FIG. 23 is a diagram showing a power generation evaluation result obtained in the first comparative example.

FIG. 24 is a diagram showing a power generation evaluation result obtained in the second comparative example.

FIG. 25 is a diagram showing a power generation evaluation result obtained in the third comparative example.

FIG. 26 is a diagram showing a relationship between a volume ratio of pores in a second pore size range and a limiting current density with respect to fuel cells obtained in the first to fifth examples and the second comparative example.

DESCRIPTION OF THE PREFERRED EMBODIMENTS

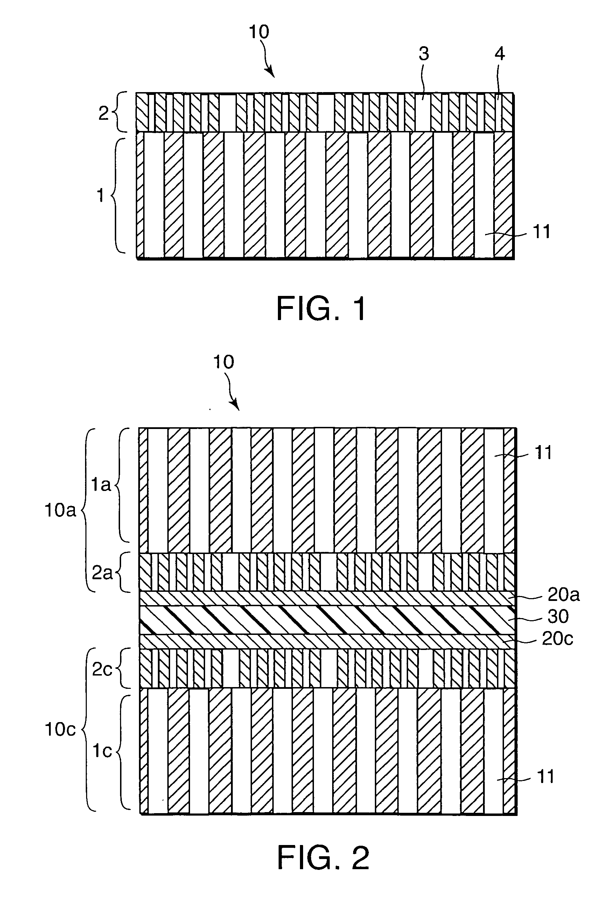

Referring to FIG. 1, a gas diffusion layer 10 according to this invention is constituted by a base material layer 1 and a conductive microparticle layer 2, which are laminated. A large number of pores 11 are formed in the base material layer 1 in a direction for penetrating the layer. Large numbers of first pores 3 and second pores 4 are likewise formed in the conductive microparticle layer 2 in a direction for penetrating the layer.

A pore size of the first pores 3 is no smaller than 0.5 micrometers ($\mu$m) and no larger than 50$\mu$m. This range will be referred to as a first pore size range. The pore size of the second pores 4 is no smaller than 0.05$\mu$m and smaller than 0.5$\mu$m. This range will be referred to as a second pore size range. Hence, the pore size of the first pores 3 is larger than the pore size of the pores 4.

A total volume of the second pores 4 is no less than 50% but less than 100% of a total volume of all of the pores in the conductive microparticle layer 2.

A pore size $D1$ of pores having a maximum volume ratio from among the first pores satisfies relationships of following equations (1), (2), and (3).

$$F1 = 4 \cdot \gamma \cdot \cos \theta_1 / D1 \qquad (1)$$

$$F2 = 4 \cdot \gamma \cdot \cos \theta_2 / D2 \qquad (2)$$

$$F1 < F2 \qquad (3)$$

where,

$F1$ = a capillary force (pascal (Pa)) acting on the pore having the maximum volume ratio of the first pores 3,
$F2$ = a capillary force (Pa) acting on the pore having the maximum volume ratio of the pores 11 in the base material layer 1,
$\gamma$ = a surface tension (Newtons (N)/meter (m)) of water,
$\theta_1$ = a contact angle (radians (rad)) between the conductive microparticle layer 2 and water,
$\theta_2$ = a contact angle (rad) between the base material layer 1 and water,
$D1$ = a pore size (m) of the pore having a maximum volume ratio of the first pores, and
$D2$ = a pore size (m) of the pore having a maximum volume ratio of the pores in the base material layer.

The second pores 4 have a smaller pore size than the first pores 3, and therefore a capillary force acting on the second pores 4 is smaller than the capillary force $F1$ acting on the first pores 3.

Due to this difference in the capillary force, water passes through the first pores 3 exhibiting the weak capillary force *F1,* whereas gas passes through the second pores 4 exhibiting the stronger capillary force.

In this manner, the gas diffusion layer 10 according to this invention achieves separation of gas passages and water passages in the conductive microparticle layer 2.

Further, as illustrated by Equation (3), the capillary force *F1* of the first pores 3 in the conductive microparticle layer 2 is smaller than the capillary force *F2* of the pores 11 in the base material layer 1. Hence, water is less likely to accumulate in the first pores 3 of the conductive microparticle layer 2, and therefore an environment in which water moves easily from the conductive microparticle layer 2 to the base material layer 1 is obtained. As a result, the gas diffusion layer 10 exhibits a superior drainage characteristic. The base material layer 1 is typically provided with a sufficient drainage characteristic in advance, and therefore, by employing the gas diffusion layer 10 having the constitution described above in a fuel cell, a favorable effect is obtained in terms of preventing flooding of the fuel cell.

To obtain an even more favorable effect, it is recommended to set the pore sizes of the first pores 3 and second pores 4 in the conductive microparticle layer 2 in even narrower ranges, as follows. The pore size of the first pores 3 is preferably no smaller than $0.8\mu m$ and no larger than $45\mu m$, and more preferably no smaller than $1\mu m$ and no larger than $40\mu m$. The pore size of the second pores 4 is preferably no smaller than $0.05\mu m$ and no larger than $0.4\mu m$. By setting the pore sizes in this manner, the difference in capillary force between the first pores 3 and the second pores 4 can be enlarged, and as a result, liquid water can be discharged from the conductive microparticle layer 2 efficiently.

As regards the second pores 4, gas permeation is possible as long as the pore size is equal to or greater than $0.05\mu m$. When the pore size of the second pores 4 is smaller than $0.5\mu m$, on the other hand, liquid water cannot infiltrate easily. Further, when the pore size of the second pores 4 is smaller than $0.5\mu m$, a compact pore structure can be maintained. As regards the first pores 3, a water-permeable condition can be secured as long as the pore size is equal to or greater than $0.5\mu m$. When the pore size is equal to or smaller than $50\mu m$, on the other hand, the conductive microparticle layer 2 can be provided with a firm but easy to handle pore structure.

A pore size distribution based on the pore volume of the first pores 3 in the conductive microparticle layer 2 and a pore size distribution based on the pore volume of the pores 11 in the base material layer 1 can be measured using a half dry method prescribed in F361-86 and E1294-89 of the American Society for Testing and Materials (ASTM).

After being measured, the pore size distribution can be expressed by a curve on a graph having the pore size on the abscissa and a pore volume ratio on the ordinate. This curve will be referred to as a pore distribution curve. When the pore size decreases gradually from a large pore size side on the distribution curve, a point at which a gradient of a tangent to the curve switches from negative to positive will be referred to as a peak. The pore size at the peak will be referred to as a peak pore size. A plurality of peaks may exist in a certain pore size range. In this case, the largest peak value will be considered as *D1* in relation to the first pores 3 and *D2* in relation to the pores 11 in the base material layer 1.

A mechanism for separating the water passages from the gas passages using the conductive microparticle layer 2 will be described below.

In the conductive microparticle layer 2, water infiltrates the pores 3, 4 in the conductive microparticle layer 2 due to capillary force. A force at which a pore having a diameter *D* suctions water, or in other words a capillary force *F*, and an external pressure required to cause water to infiltrate a pore having the diameter *D*, or in other words a water infiltration required pressure P, are expressed by a following Equation (4).

$$F = 4 \cdot \gamma \cdot \cos \theta / D = - P \qquad (4)$$

where,

> *F* = the capillary force (Pa),
> $\gamma$ = the surface tension (N/m) of water,
> $\theta$ = the contact angle (rad) with water,
> *D* = the pore size (m), and
> *P* = the water infiltration required pressure (Pa).

As is evident from Equation (4), the capillary force *F* is dependent on the pore size *D* and the contact angle $\theta$ with water. In other words, the capillary force *F* decreases as the pore size *D* decreases and the contact angle $\theta$ increases. In particular, when the contact angle $\theta$ exceeds 90 degrees, the capillary force *F* takes a negative value and acts as a force for expelling water infiltrating the pore. Therefore, when the contact angle $\theta$ exceeds 90 degrees, the external pressure required for water to infiltrate the pore increases. When the capillary force *F* takes a positive value, on the other hand, a force for suctioning water into the pore, or in other words a suction force, is exerted such that the pressure required for the water to infiltrate the pore, or in other words the water infiltration required pressure *P*, takes a negative value.

When a pressure applied to the conductive microparticle layer 2 is smaller than the water infiltration required pressure $P$ for infiltrating the pore 3(4), water does not infiltrate the pore 3(4). The water infiltration required pressure $P$ of the pores 4 in the second pore size range is large and the capillary force $F$ thereof takes a negative value. Hence, water does not infiltrate the pores 4 in the second pore size range. The water infiltration required pressure $P$ of the pores 3 in the first pore size range, on the other hand, takes a negative value and the capillary force $F$ thereof takes a positive value. Hence, water infiltrates the pores 3 in the first pore size range easily. As a result, of the pores 3 and the pores 4, water only flows through the pores 3 having a large pore size.

By setting the pore size of the first pores 3 and the pore size of the second pores 4 in the conductive microparticle layer 2 appropriately, the capillary force acting on the first pores 3 and the capillary force acting on the second pores 4 can be controlled to desired ranges. As a result, the first pores 3 can be used as water passages and the second pores 4 can be used as gas passages.

The capillary force $F1$ acting on the pores having the maximum volume ratio of the first pores 3 is preferably set within a range of -15 kilopascals (kPa) to -200kPa at a temperature of 25 degrees centigrade (°C). More preferably, the capillary force $F1$ is set within a range of -20kPa to -150kPa, and even more preferably within a range of -30kPa to -80kPa.

The capillary force $F2$ acting on the pores having the maximum volume ratio of the pores 11 in the base material layer 1 is preferably set within a range of OkPa to - 15kPa at a temperature of 25°C. More preferably, the capillary force $F2$ is set within a range of OkPa to - 13kPa, and even more preferably within a range of OkPa to -10kPa.

By adjusting the capillary force $F1$ and the capillary force $F2$ into these respective preferred ranges, a discharge performance from the conductive microparticle layer 2 to the base material layer 1 can be improved.

There are no particular limitations on the contact angle $\theta_1$ between the conductive microparticle layer 2 and water as long as the water passages and the gas passages are separated and a smaller capillary force is realized on the conductive microparticle layer 2 than on the base material layer 1, but the contact angle $\theta_1$ is preferably set within a range of no less than 130 degrees (°) and no more than 180°, more preferably within a range of no less than 133° and no more than 180°, and even more preferably within a range of no less than 135° and no more than 180°.

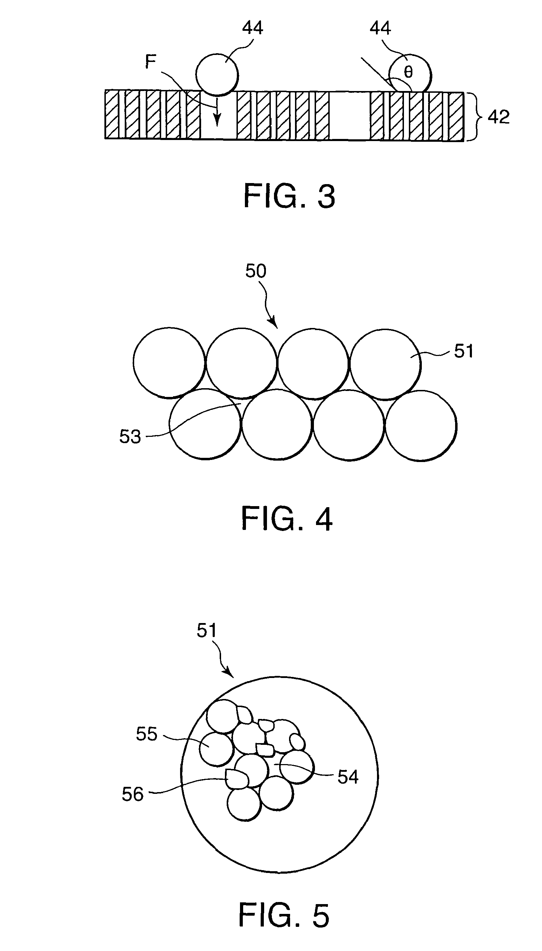

Referring to FIG. 3, the contact angle $\theta_1$ between the conductive microparticle layer 2 and water can be measured using a liquid drop method in which a water droplet 44 is dropped onto the surface of the conductive microparticle layer 2 and the angle thereof is measured. The contact angle $\theta_2$ between the base material layer 1 and water can be measured using the same method. It should be noted, however, that the contact angles $\theta_1$, $\theta_2$ may be measured using a method other than the liquid drop method.

As noted above, the total volume of the second pores 4 is set at no less than 50% but less than 100% of the total pore volume of the conductive microparticle layer 2, but is preferably set at no less than 55% and no more than 98% and more preferably no less than 60% and no more than 95%. By adjusting the total volume of the second pores 4 to a more preferable range, a reaction gas flow sectional area is increased, and as a result, the performance of a fuel cell using the gas diffusion layer 10 is improved.

The pore size of the pores having the maximum volume ratio of the second pores 4 in the conductive microparticle layer 2 may be adjusted in accordance with a particle diameter of the conductive microparticles and binder particles constituting the conductive microparticle layer 2 and the binder particle content of the conductive microparticle layer 2. The volume of the pores having the maximum volume ratio of the second pores 4 may be calculated by integrating the pore size distribution curve of the conductive microparticle layer 2.

There are no particular limitations on the material of the conductive microparticle layer 2 as long as the pore size distribution, contact angle $\theta$, and capillary force $F1$ described above can be realized. However, the conductive microparticle layer 2 is preferably constituted by conductive microparticles and binder particles. Electrons generated by an electrode reaction flow to the outside through the conductive microparticle layer 2, and therefore, by employing conductive microparticles, the conductive microparticle layer 2 can be provided with high conductivity. Furthermore, by including binder particles, a strong pore structure can be realized.

Constitution of conductive microparticle layer 2

Referring to FIGs. 4 and 5, a preferred structure for the conductive microparticle layer 2 will be described.

Referring to FIG. 4, the conductive microparticle layer 2 is constituted by a large number of clusters 51. A large number of the first pores 3 are formed between the clusters 51.

Referring to FIG. 5, the cluster 51 is constituted by a large number of conductive microparticles 55 bound together by binder particles 56. The cluster 51 has a porous structure in which the second pores 4 are formed irregularly or regularly among the conductive particles 55, among the binder particles 56, and between the conductive particles 55 and the binder particles 56.

By constructing the conductive microparticle layer 2 in this manner, the differently sized first pores 3 and second pores 4 can be formed easily and reliably in the conductive microparticle layer 2.

Particles that remain chemically stable under a positive electrode potential and a negative electrode potential are preferable as the conductive particles. Carbon particles, aluminum metal particles, and stainless steel (SUS) particles are used in a gas diffusion layer for cathode gas, while carbon particles, silver particles, gold particles, copper particles, titanium particles, and SUS particles are used in a gas diffusion layer for anode gas. Carbon particles are used particularly preferably in the gas diffusion layers for the anode gas and/or the cathode gas. Carbon particles have an extremely wide potential window and remain stable when used under both a positive electrode potential and a negative electrode potential. In addition, carbon particles exhibit superior conductivity.

Materials exhibiting superior electron conductivity, such as carbon black, graphite, and expanded graphite, are preferable as the carbon particles. Of these materials, carbon black such as oil furnace black, channel black, lamp black, thermal black, and acetylene black is recommended due to its superior electron conductivity and large specific surface area.

The binder particles serve to bind the conductive microparticles. Examples of binder particles include fluorine-based polymer materials such as polytetrafluoroethylene (PTFE) particles, polyvinylidene difluoride (PVDF) particles, polyhexafluoropropylene particles, and tetrafluoroethylene-hexaflurorpropylene copolymer (FEP) particles, polypropylene particles, and polyethylene particles. Of these materials, a fluorine-based polymer material is recommended due to its superior water repellency and resistance to corrosion during an electrode reaction. Polytetrafluoroethylene (PTFE) particles are particularly preferable.

By employing water-repellent binder particles, the second pores 4 of the conductive microparticle layer 2 can be provided with water repellency, and therefore the contact angle between the pores 4 and water can be further increased. As a result, the water infiltration required pressure required to infiltrate the pores 4 increases, and therefore water infiltration into the pores 4 is further suppressed. The binder particles may be constituted by a single type or a plurality of types in combination. Furthermore, polymers other than those described above may be used as the binder particles.

An average particle diameter of the conductive microparticles is determined such that the pores formed in the gaps between the conductive microparticles/binder particles have a desired size. More specifically, the average particle diameter of the conductive microparticles is preferably between $0.1\mu m$ and $3\mu m$, more preferably between $0.3\mu m$ and $2\mu m$, and even more preferably between $0.5\mu m$ and $1\mu m$. By adjusting the average particle diameter of the conductive microparticles to a preferred range, a desired pore size distribution and a superior drainage characteristic based on the capillary force are obtained. Further, a contact characteristic between the conductive microparticle layer 2 and a catalyst layer is improved when the gas diffusion layer 10 is applied to a fuel cell. There are no particular limitations on the average particle diameter of the binder particles as long as the clusters 51 including the second pores 4 can be formed, but the average particle diameter of the binder particles is preferably between 100 nanometers (nm) and 500nm, and more preferably between 200nm and 300nm.

An average particle diameter of the clusters 51 formed from the conductive microparticles/binder particles is determined such that the first pores 3 formed between the clusters 51 have a desired size. More specifically, the average particle diameter of the clusters 51 is preferably between $10\mu m$ and $500\mu m$, more preferably between $20\mu m$ and $300\mu m$, and even more preferably between $25\mu m$ and $250\mu m$. By adjusting the particle size of the cluster 51 to a preferred range, a diameter and a distributed number of the first pores 3 can be brought close to optimum values for realizing the effects of this invention. When the average particle diameter of the clusters 51 is $10\mu m$ or more, liquid phase water can pass through the clusters 51 easily. When the average particle diameter of the clusters 51 is $500\mu m$ or less, film deposition can be performed easily.

The average particle diameters of the conductive microparticles, the binder particles, and the clusters 51 thereof are determined by measuring the particle diameters of the respective components using a transmission electron microscope (TEM) and calculating average values of the measurement results.

A content ratio between the conductive microparticles and the binder particles on the conductive microparticle layer 2 is set such that desired characteristics are obtained in terms of the pore structure of the conductive microparticle layer, in particular the strength of the second pores 4, and the water repellency of the second pores 4, or in other words the contact angle. More specifically, the contents of the two types of particles are adjusted such that the binder particle content is preferably between 15% and 60% by weight, more preferably between 20% and 50% by weight, and even more preferably between 30% and 40% by weight of the total weight of the conductive microparticle layer. When a mixing ratio of the binder particles is 15% by weight or more, the conductive microparticles can be joined to each other, and when the mixing ratio is 60% by weight or less, an electric resistance of the conductive microparticle layer can be kept low.

The numbers of first pores 3 and second pores 4 formed in the conductive microparticle layer 2 are preferably as large as possible while maintaining mechanical strength. More specifically, a proportion of the conductive microparticle layer 2 occupied by pores, or in other words a porosity, is set between 50% and 95% by volume, preferably between 60% and 90% by volume, and more preferably between 70% and 80% by volume of the total volume of the conductive microparticle layer 2. By adjusting the porosity of the conductive microparticle layer 2 to a preferred range, sufficient mechanical strength can be secured in the conductive microparticle layer 2 while achieving improvements in both a gas diffusion characteristic and the drainage characteristic thereof.

There are no particular limitations on a method of measuring the porosity. For example, the volume of the pores 3, 4 existing in the conductive microparticle layer 2 may be measured by measuring the pore distribution using mercury porosimetry and calculating the volume of the pores 3, 4 as a proportion of the volume of the conductive microparticle layer 2.

A thickness of the conductive microparticle layer 2 is preferably between $10\mu m$ and $100\mu m$, and more preferably between $30\mu m$ and $80\mu m$. By adjusting the thickness of the conductive microparticle layer 2 to a preferred range, the gas diffusion characteristic and drainage characteristic of the conductive microparticle layer 2 can be improved.

Constitution of base material layer 1

The base material layer 1 has a sufficiently porous structure for diffusing a fuel gas or an oxidant gas supplied from the outside, and is constituted by a material having sufficient conductivity to collect electrons generated by a power generation reaction.

There are no particular limitations on the constitutional material of the base material layer 1, and a known constitution may be applied. More specifically, conductive, porous sheet-form materials such as carbon fabric, finished paper, felt, and nonwoven fabric may be cited as examples. By employing a porous sheet-form material, the gas supplied from the outside can be diffused evenly over the base material layer 1. More specifically, a base material such as carbon paper, carbon cloth, and carbon non-woven fabric is preferable. When the base material layer 1 possesses superior electron conductivity, the electrons generated by the power generation reaction are transported efficiently, leading to an improvement in the performance of the fuel cell employing the gas diffusion layer 10. Further, when the base material layer 1 possesses superior water repellency, generated water is discharged efficiently.

To secure high water repellency, the base material layer preferably contains a water repellant. There are no particular limitations on the water repellant, but a fluorine-based polymer material such as polytetrafluoroethylene (PTFE), polyvinylidene difluoride (PVDF), polyhexafluoropropylene, or tetrafluoroethylene-hexaflurorpropylene copolymer (FEP), polypropylene, polyethylene, and so on may be used.

A thickness of the base material layer 1 is determined in consideration of the characteristics of the gas diffusion layer 10 to be obtained, but is typically set between approximately $30\mu m$ and $500\mu m$. When the thickness of the base material layer 1 takes a value within this range, a favorable balance is obtained between mechanical strength and gas and water permeability.

Next, a membrane electrode assembly (MEA) employing the gas diffusion layer 10 will be described.

Referring to FIG. 2, gas diffusion layers 10a, 10c form a part of a membrane electrode assembly (MEA) 100. The MEA 100 includes a solid polymer electrolyte membrane 30, an anode catalyst layer 20a contacting one of two surfaces of the electrolyte membrane 30, and a cathode catalyst layer 20c contacting the other surface of the electrolyte membrane 30.

Gas diffusion layers 10a, 10c

The gas diffusion layer 10a is constituted by a base material layer 1a and a conductive microparticle layer 2a. The gas diffusion layer 10c is constituted by a base material layer 1c and a conductive microparticle layer 2c. The gas diffusion layer 10a is laminated to the anode catalyst layer 20a such that the conductive microparticle layer 2a contacts the anode catalyst layer 20a. The gas diffusion layer 10c is laminated to the cathode catalyst layer 20c such that the conductive microparticle layer 2c contacts the cathode catalyst layer 20c.

Here, the gas diffusion layers 10a and 10c are identical to the gas diffusion layer 10 of FIG. 1, but indices a, c are appended thereto to clarify the respective positional relationships thereof to the anode catalyst layer 20a and the cathode catalyst layer 20c. This applies likewise to the base material layers 1a, 1c and the conductive microparticle layers 2a, 2c. The gas diffusion layers 10a, 10c are constructed identically to the gas diffusion layer 10 described above with reference to FIG. 1.

The gas diffusion layers 10a, 10c have a function for promoting diffusion of a reaction gas supplied from a gas passage in a separator of the fuel cell to the catalyst layers 20a, 20c and a function as an electron conduction path. By applying the gas diffusion layers 10a, 10c to the MEA 100, excessive water generated in the vicinity of the anode catalyst layer 20a and the vicinity of the cathode catalyst layer 20c can be discharged quickly without accumulating.

Solid polymer electrolyte membrane 30

The solid polymer electrolyte membrane 30 is formed from a polymer electrolyte having proton conductivity, and selectively transmits protons generated by the anode catalyst layer during an operation of the polymer electrolyte fuel cell in a film thickness direction toward the cathode catalyst layer. The solid polymer electrolyte membrane 30 also functions as a partition wall for ensuring that the fuel gas supplied to the anode and the oxidant gas supplied to the cathode do not intermix.

There are no particular limitations on the specific constitution of the solid polymer electrolyte membrane 30, and a solid polymer electrolyte membrane well known in the technical field of fuel cells may be used as the solid polymer electrolyte membrane 30. Solid polymer electrolyte membranes may be broadly divided into fluorine-based solid polymer electrolyte membranes and hydrocarbon-based solid polymer electrolyte membranes depending on the type of polymer electrolyte used to form the membrane.

Examples of polymer electrolytes forming fluorine-based solid polymer electrolyte membranes include perfluorocarbon sulfonate polymers such as Nafion® (manufactured by Du Pont), Asiplex® (manufactured by Asahi Kasei Corporation), and Flemion® (manufactured by Asahi Glass Co. Ltd.). Alternatively, a perfluorocarbon phosphonate polymer, a trifluorostyrene sulfonate polymer, an ethylene tetrafluoroethylene -g- styrene sulfonate polymer, an ethylene - tetrafluoroethylene copolymer, a polyvinylidene fluoride - perfluorocarbon sulfonate polymer, and so on may be used. Taking into account its advantages in terms of power generation performance, such as thermal resistance and chemical stability, a fluorine-based solid polymer electrolyte membrane is preferably used as the solid polymer electrolyte membrane 30. Among fluorine-based solid polymer electrolyte membranes, a perfluorocarbon sulfonate polymer is preferable.

Examples of polymer electrolytes forming hydrocarbon-based solid polymer electrolyte membranes include sulfonated polyether sulfone (S-PES), sulfonated polyaryl ether ketone, sulfonated polybenzimidazole alkyl, phosphonated polybenzimidazole alkyl, sulfonated polystyrene, sulfonated polyether ether ketone (S-PEEK), and sulfonated polyphenylene (S-PPP). Hydrocarbon-based solid polymer electrolyte membranes use inexpensive raw materials, are easy to manufacture, and benefit from high material selectivity. Therefore, from the point of view of manufacture, a hydrocarbon-based solid polymer electrolyte membrane is preferably used as the solid polymer electrolyte membrane 30. A single type of polymer electrolyte or two or more types combined may be used.

A thickness of the solid polymer electrolyte membrane 30 is determined in consideration of the characteristics of the MEA 100 and the polymer electrolyte. The thickness of the solid polymer electrolyte membrane 30 is preferably set between $5\mu$m and $300\mu$m, more preferably between $5\mu$m and $200\mu$m, even more preferably between $10\mu$m and $150\mu$m, and particularly preferably between $15\mu$m and $50\mu$m. By setting the thickness of the solid polymer electrolyte membrane 30 in a preferred range, a favorable balance can be obtained between strength during film deposition, durability during use, and an output characteristic during use.

Electrode catalyst layer

The anode catalyst layer 20a and the cathode catalyst layer 20c will be referred to collectively as an electrode catalyst layer. The electrode catalyst layer generates electric energy through an electrochemical reaction. In the anode catalyst layer 20a, protons and electrons are generated by an oxidation reaction of hydrogen. The generated protons and electrons are used in an oxygen reduction reaction in the cathode catalyst layer 20c.

The electrode catalyst layer includes an electrode catalyst, in which a catalyst component is carried on a conductive carrier, and a polymer electrolyte. There are no particular limitations on the specific constitution of the electrode catalyst layer, and an electrode catalyst layer well known in the technical field of fuel cells may be used.

The conductive carrier, the catalyst component, and the polymer electrolyte will be described below.

Conductive carrier

The conductive carrier is a carrier that carries the catalyst component and possesses conductivity. The conductive carrier requires a sufficient specific surface area to carry the catalyst component in a desired state of dispersion and sufficient electron conductivity. Carbon is preferably a main component of the conductive carrier. More specifically, carbon black, activated carbon, coke, natural graphite, artificial graphite, and so on may be cited as examples of the main component of the conductive carrier. The term "the main component is carbon" means that carbon atoms are included as the main component, and this term encompasses substances constituted by carbon atoms alone and substances constituted substantially by carbon atoms. To improve the characteristics of the fuel cell, in certain cases the main component may contain elements other than carbon atoms. The term "constituted substantially by carbon atoms" means that impurities of 2% to 3% by weight may be intermixed.

There are no particular limitations on a Brunauer-Emmet-Teller (BET) specific surface area of the conductive carrier as long as it is sufficient for carrying the catalyst component in a highly dispersed state. However, the BET specific surface area is preferably set between $100m^2$/g and $1500m^2$/g, and more preferably between $600m^2$/g and $1000m^2$/g. By setting the specific surface area of the conductive carrier in a preferred range, a favorable balance can be obtained between the dispersion characteristic of the catalyst component on the conductive carrier and an effective utilization of the catalyst component.

There are no particular limitations on the average particle diameter of the conductive carrier, but the average particle diameter is normally set between 5nm and 200nm, and preferably between approximately 10nm and 100nm. It should be noted that a value calculated in a primary particle diameter measurement method employing a transmission electron microscope (TEM) is used as the value of the "average particle diameter of the conductive carrier".

Catalyst component

The catalyst component performs a catalytic action during the aforementioned electrochemical reaction. There are no particular limitations on the catalyst component carried on the conductive carrier as long as it exhibits a catalytic action for promoting the aforementioned electrochemical reaction, and a well-known catalyst component may be used. Specific examples of the catalyst component include metals such as platinum, ruthenium, iridium, rhodium, palladium, osmium, tungsten, lead, iron, chromium, cobalt, nickel, manganese, vanadium, molybdenum, potassium, and aluminum, an alloy thereof, and so on. Of these substances, the catalyst component preferably contains at least platinum due to its superior catalytic activity, resistance to elution, and so on. When an alloy is used as the catalyst component of the electrode catalyst layer, a composition of the alloy differs according to the types of metals to be alloyed and so on. However, an alloy composition of approximately 30 atomic percent to 90 atomic percent of platinum and approximately 10 atomic percent to 70 atomic percent of the other alloyed metal is preferable.

An "alloy" is typically formed by adding one or more metallic or non-metallic elements to a metallic element, and is the collective term for a substance having metallic properties. Alloy structures include so-called eutectic alloys, which are mixtures in which the component elements are separate crystals, structures in which the component elements are mixed completely to form a solid solution, structures in which the component elements form an intermetallic compound or a compound between a metal and a non-metal, and so on. When the catalyst component is constituted by an alloy, any of these alloy structures may be used. The alloy composition can be specified using an ICP atomic emission spectrometry method using high-frequency inductively coupled plasma (ICP) as a light source.

There are no particular limitations on the shape and size of the catalyst component, and a similar shape and size to a known catalyst component may be employed. However, the catalyst component is preferably particle-shaped. The average particle diameter of the catalyst component particles is preferably between 0.5nm and 30nm and more preferably between 1nm and 20nm. By setting the average particle diameter of the catalyst component particles in a preferred range, a favorable balance can be obtained between the carrying ease and the catalyst utilization relative to an effective electrode surface area on which the electrochemical reaction advances. The value of the "average particle diameter of the catalyst component particles" is determined as a crystallite diameter obtained from the full width at half maximum of a diffraction peak of the catalyst component particles during X-ray diffraction, or an average value of the particle diameter of the catalyst component examined on a transmission electron microscope image.

There are no particular limitations on a catalyst component carrying amount of the electrode catalyst, but relative to the total weight of the electrode catalyst, the catalyst component carrying amount is preferably set between 5% and 70% by weight, more preferably between 10% and 60% by weight, and even more preferably between 30% and 55% by weight. When the ratio of the catalyst component carrying amount is equal to or larger than 5% by weight, the electrode catalyst exhibits a sufficient catalyst performance, which contributes to an improvement in the power generation performance of the polymer electrolyte fuel cell. When the ratio of the catalyst component carrying amount is equal to or smaller than 70%, meanwhile, catalyst component coagulation on the surface of the conductive carrier is suppressed, and therefore the catalyst component is carried in a highly dispersed state. It should be noted that the catalyst component carrying amount employs a value measured using ICP optical emission spectrometry.

Polymer electrolyte 30

The polymer electrolyte 30 has a function for improving the proton conductivity of the electrode catalyst layer. There are no particular limitations on the specific form of the polymer electrolyte contained in the electrode catalyst layer, and a polymer electrolyte well known in the technical field of fuel cells may be used. A polymer electrolyte for forming the solid polymer electrolyte membrane described above, for example, may be used as the polymer electrolyte contained in the electrode catalyst layer. Accordingly, detailed description of the specific form of the polymer electrolyte has been omitted. It should be noted that the polymer electrolyte contained in the electrode catalyst layer may be provided in a single type or two or more types combined.

To secure superior ion conductivity, an ion exchange capacity of the polymer electrolyte contained in the electrode catalyst layer is preferably between 0.8 millimols (mmol)/gram (g) and 1.5mmol/g, and more preferably between 1.0mmol/g and 1.5mmol/g. The "ion exchange capacity" of the polymer electrolyte is a number of moles of sulfonate groups per unit dry mass of the polymer electrolyte. A value of the "ion exchange capacity" can be calculated by subjecting a carrier fluid of a polymer electrolyte liquid dispersion to heating, drying, and so on to remove the carrier fluid such that a solid polymer electrolyte remains, and subjecting the solid polymer electrolyte to acid-base titration.

There are no particular limitations on the polymer electrolyte content of the electrode catalyst layer. However, a mass ratio of the polymer electrolyte content relative to the conductive carrier content of the electrode catalyst layer is preferably set between 0.5 and 2.0, more preferably between 0.6 and 1.5, and even more preferably between 0.8 and 1.3. When the mass ratio between the polymer electrolyte and the conductive carrier is equal to or greater than 0.8, an internal resistance value of the MEA 100 can be suppressed. When the mass ratio between the polymer electrolyte and the conductive carrier is equal to or smaller than 1.3, flooding can be suppressed.

The respective catalyst layers, and in particular the conductive carrier surface and the polymer electrolyte, may also be covered with or contain a water repellant and other types of additives. When a water repellant is included, the water repellency of the obtained catalyst layer can be improved such that water and the like generated during power generation can be discharged quickly. A mixing amount of the water repellant may be determined arbitrarily within a range that does not affect the actions and effects of this invention. The examples of water repellants described above in relation to the base material layer 1 may be used as the water repellant.

There are no particular limitations on the thickness of the electrode catalyst layer, but the thickness is preferably set between 0.1μm and 100μm and more preferably between 1μm and 20μm. When the thickness of the catalyst layer is equal to or greater than 0.1μm, a desired power generation amount can be obtained, and when the thickness is equal to or smaller than 100μm, a high output can be maintained.

This invention also proposes a new method of manufacturing the gas diffusion layer 10 and the MEA 100. Methods of manufacturing the gas diffusion layer 10 and the MEA 100 according to this invention will be described below.

Manufacturing method for gas diffusion layer 10

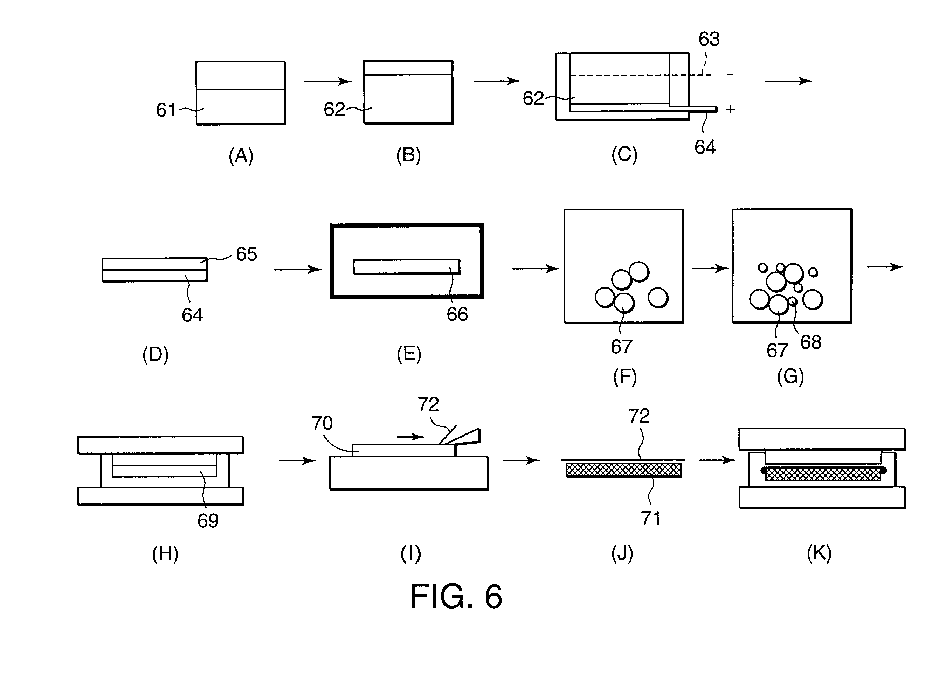

Referring to FIG. 6, a method of manufacturing the gas diffusion layer 10 according to this invention will be described.

The manufacturing method for the gas diffusion layer 10 is constituted by four stages, namely a first process to a fourth process. In the first process, the conductive microparticles and the binder particles are mixed together and baked to obtain a sintered body of the conductive microparticles and the binder particles. In a second process, the sintered body is pulverized to obtain a powder. In a third process, the powder is formed into a sheet to obtain the conductive microparticle layer. In the fourth process, the conductive microparticle layer 2 and the base material layer 1 are joined.

(1) First process

The first process corresponds to a section extending from a process (A) to a process (E) in the figure. In this process, the conductive microparticles and the binder particles are mixed together and baked to obtain a sintered body of the conductive microparticles and the binder particles.

In the process (A), conductive microparticles constituted by carbon particles made of carbon black or the like are added to pure water containing a non-ionic surfactant and dispersed to an average particle diameter of 0.1μm to 1μm in an appropriate dispersion device, for example an ultrasonic dispersion machine, a jet mill, or a bead mill, to prepare a conductive microparticle liquid dispersion 61. The carbon particles made of carbon black or the like are formed into lumps through secondary coagulation. Using the dispersion device, microparticles are formed up to an appropriate size, and by adsorbing the surfactant onto the surface of the microparticles, a stable liquid dispersion is obtained.

In a process (B), a binder particle liquid dispersion made of PTFE or the like is added to the conductive microparticle liquid dispersion 61 in a required amount and mixed therein, whereupon the mixture is stirred gently using an appropriate stirring device, for example an agitator, such that excessive stress is not applied. As a result, a conductive microparticle/binder particle liquid dispersion 62 is obtained. A liquid dispersion employing an optimum surfactant remains stable as long as excessive shearing stress is not applied thereto. For example, under normal agitation, shaking, ultrasonic irradiation, and so on, the binder particles do not coagulate into fibers.

The reason why a binder particle liquid dispersion is used here is that due to a water repelling action of the binder particles, the binder particles cannot be dispersed through water when added alone. As the binder particle liquid dispersion, commercially available products manufactured by Daikin Industries Ltd., Asahi Glass Co. Ltd., Mitsui Fluorochemicals Ltd., and so on can be obtained easily.

The mixing amount of the conductive microparticles is preferably set within a range of 1% to 10% by weight and more preferably within a range of 5% to 9% by weight relative to the conductive microparticle/binder particle liquid dispersion. The mixing amount of the binder particles is preferably set within a range of 1% to 10% by weight and more preferably within a range of 3% to 6% by weight relative to the conductive microparticle/binder particle liquid dispersion.

The non-ionic surfactant is preferably dispersed through the pure water serving as a solvent, and more preferably dispersed highly evenly, in a microparticle state without causing the conductive microparticles and the binder particles to coagulate. Specific examples of the non-ionic surfactant include a polyoxyethylene phenyl ether such as Triton X-100, and N-100, which is a polyoxyethylene alkyl ether, but the non-ionic surfactant is not limited thereto. However, in terms of phase separation, Triton X-100 and N-100 are preferable due to their suitable clouding points. The non-ionic surfactant may be provided in a single type or two or more types combined.

The mixing amount of the non-ionic surfactant increases and decreases in proportion to the specific surface area of the conductive microparticles made of carbon black or the like. Here, acetylene black (manufactured by Denki Kagaku Kogyo) will be described as an example. In this case, the mixing amount of the non-ionic surfactant is preferably set with a range of 0.5% to 20% by weight and more preferably within a range of 0.5% and 8% by weight relative to the conductive microparticle/binder particle liquid dispersion. When the mixing amount of the non-ionic surfactant is equal to or greater than 0.5% by weight, favorable dispersion can be expected. When the mixing amount of the non-ionic surfactant is equal to or smaller than 20% by weight, meanwhile, the actions and effects of this invention are not impaired.

In a process (C), the conductive microparticle/binder particle liquid dispersion is solidified. If shearing stress is applied to the conductive microparticle/binder particle liquid dispersion before the liquid dispersion is solidified and baked, the binder particles may coagulate into fibers. To prevent the binder particles from coagulating into fibers, the conductive microparticle/binder particle liquid dispersion is preferably solidified from a liquid state using a solidification method that does not apply stress.

Hence, although there are no particular limitations on the solidification method, a method of solidifying the conductive microparticle/binder particle liquid dispersion through electrodeposition, for example, may be used. More specifically, by applying an appropriate electrodeposition method such as migration electrodeposition, for example, to the conductive microparticle/binder particle liquid dispersion 62, a solid 65 is electro-deposited on a migration electrodeposition anode 64. When an electrodeposition method is used, the binder particles do not become fibrous, and therefore a sintered body having an even, compact pore structure is obtained when the solid 65 is baked.

A stable material that does not dissolve electrochemically is preferable as the migration electrodeposition anode 64, and therefore platinum plate, platinum-coated titanium plate, or iridium-coated titanium plate, for example, may be used. Various well-known electrode materials such as nickel steel, for example, may be used as a migration electrodeposition cathode 63.

Instead of an electrodeposition process, the conductive microparticle/binder particle liquid dispersion may be solidified by a phase separation concentration method using a phase separation phenomenon of the non-ionic surfactant. With an electrodeposition method, however, a solid can be collected in a comparatively short time, and therefore an electrodeposition method is preferable.

In a process (D), the solid 65 obtained in the process (C) is removed together with the migration electrodeposition anode 64, dried if necessary, and then peeled away from the migration electrodeposition anode 64. When drying is performed, the drying is preferably performed under conditions in which no shearing stress is applied, thereby ensuring that the binder particles do not become fibrous. For this purpose, the drying is preferably performed for approximately 10 to 30 minutes at 70°C to 120°C. A temperature increase speed to the drying temperature is preferably set within a range of 10°C/minute to 100°C/minute, and more preferably within a range of 20°C/minute to 50°C/minute.

In the process (E), the dried solid 65 is heated and baked to obtain a mixed sintered body 66. As regards baking conditions, the baking is performed for 0.5 to 3 hours in a temperature region that is equal to or higher than a melting point of the binder particles, and preferably between 5°C and 50°C higher than the melting point of the binder particles. The temperature increase speed to the baking temperature is preferably set within a range of 10°C/minute to 200°C/ minute, and more preferably within a range of 50°C/minute to 150°C/minute.

By adjusting the baking temperature, a contact angle of a surface of the mixed sintered body 66 constituted by the conductive microparticles and the binder particles can be varied. The contact angle of the surface of the mixed sintered body 66 corresponds to a contact angle of small diameter pores formed in a conductive microparticle layer obtained subsequently. As the baking temperature of the mixed sintered body 66 increases, the contact angle of the small diameter pores can be increased. For example, when acetylene black (manufactured by Denki Kagaku Kogyo) is used, the contact angle obtained when baking is performed for two hours at 360°C is approximately 130°.

From the viewpoint of productivity, a thickness of the mixed sintered body 66 is preferably set within a range of 0.2 millimeters (mm) to 5mm, and more preferably within a range of 0.5mm to 3mm.

(2) Second process

The second process corresponds to processes (F) and (G) in the figure.

In the process (F), the mixed sintered body 66 is pulverized minutely through pulverization, for example, and then graded using an appropriate grading device, for example a sieve or a grader, to obtain a powder 67 having a desired particle diameter.

After the process (F), a water-attracting agent may be added to and mixed into the powder 67 in the process (G) if necessary. By adding and intermixing a water-attracting agent 68 into the powder 67, a powder 69 coated on its surface with the water-attracting agent 68 is obtained. As a result, the surfaces of the clusters 51, or in other words the large diameter pores, are made hydrophilic. Hence, the water repellency of the large diameter pores alone can be reduced without reducing the water repellency of the small diameter pores, and the contact angle of the large diameter pores can be reduced.

There are no particular limitations on the water-attracting agent, and examples thereof include oxides such as silicon dioxide ($SiO_2$), stannic oxide ($SnO_2$), and titanium oxide ($TiO_2$), and polymers such as cellulose. Of these substances, $SiO_2$ is preferable due to its chemical stability. A mixing ratio of the water-attracting agent is preferably within a range of 1% to 20% by weight relative to the conductive microparticle layer containing the water-attracting agent. When the mixing ratio of the water-attracting agent is equal to or higher than 1% by weight, the large diameter pores can be made sufficiently hydrophilic, and when the mixing ratio is equal to or smaller than 20% by weight, a sufficient number of pores can be maintained. An average particle diameter of the water-attracting agent is set within a range of 10nm to 1000nm, and preferably within a range of 100nm to 500nm, so that the large diameter pores can be made hydrophilic without blocking the small diameter pores.

(3) Third process

The third process corresponds to processes (H) and (I) in the figure.

In the process (H), the powder 69 of the mixture of conductive microparticles and binder particles containing the water-attracting agent, which was obtained in the process (G), is charged into a die and hot-pressed to obtain a sheet-form sintered body 70.

There are no particular limitations on the hot-pressing die, and a well-known hot-pressing die may be used.

As regards hot-pressing conditions, the hot-pressing is performed for 0.5 to 3 minutes, and preferably 1 to 2 minutes, at a heating temperature that is equal to or higher than the melting point of the binder, or more preferably higher than the melting point of the binder by 5°C to 20°C, and at a pressure of at least 10 kilograms (kg)/square meter ($cm^2$), or more preferably between 20kg/$cm^2$ and 150kg/$cm^2$.

During the hot-pressing, the size and number of the first pores 3 formed between the clusters 51 may be controlled using an imprinting technique, and more particularly a nano-imprinting technique. More specifically, an indented pattern corresponding to the desired size, number, arrangement, and so on of the first pores 3 is formed in advance in the die or mold to be employed during the hot-melting using an imprinting technique such that during the hot-melting, a desired pattern can be transferred onto the conductive microparticle layer 2. Thus, the size and number of the first pores 3 formed between the clusters 51 can be controlled.

In the process (I), the sheet-form sintered body 70 is cut into thin sections by a sharp cutter such as a microtome to obtain a conductive microparticle layer 72.

Hence, the conductive microparticle layer 72 exhibiting little thickness unevenness can be manufactured in a small number of manufacturing steps. Since a solvent is not used in the manufacturing method, a solvent recovery facility is not required, and therefore environmental measures are simplified.

(4) Fourth process

The fourth process corresponds to processes (J) and (K) in the figure.

The gas diffusion layer 10 is obtained by joining the conductive microparticle layer 2 obtained in the process (I) to the base material layer 1 through hot-pressing.

The conductive microparticle layer 72 and a base material layer 71 are set in a jig and joined through hot-pressing.

As regards the hot-pressing conditions, the hot-pressing is performed for 0.5 to 3 minutes, and preferably 1 to 2 minutes, at a heating temperature that is equal to or higher than the melting point of the binder, or more preferably higher than the melting point of the binder by 5°C to 20°C, and at a pressure of at least 10kg/$cm^2$, or more preferably between 20kg/$cm^2$ and 50kg/$cm^2$. There are no particular limitations on the hot-pressing jig, and a well-known hot-pressing jig may be used. The constitution and thickness of the base material layer 1 are as described above.

By applying the manufacturing method for a gas diffusion layer according to this invention, described above, the gas diffusion layer 10 according to this invention can be manufactured efficiently. However, the gas diffusion layer 10 according to this invention is not limited to the manufacturing method for a gas diffusion layer according to this invention and may be manufactured using a well-known manufacturing method.

Manufacturing method for MEA 100

The MEA 100 is manufactured using a well-known method of forming an anode side electrode catalyst layer and a cathode side electrode catalyst layer on either surface of the solid polymer electrolyte membrane 30 and sandwiching the resulting component between the gas diffusion layers 10 obtained using the method described above. A processing sequence is set such that the electrode catalyst layers formed on the solid polymer electrolyte membrane 30 are sandwiched by a pair of the gas diffusion layers 10 and joined thereto. Alternatively, the electrode catalyst layers are formed on one surface of the gas diffusion layers 10, whereupon the solid polymer electrolyte membrane 30 is sandwiched by a pair of the gas diffusion layers 10 such that the electrode catalyst layers oppose each other, and then joined thereto.

The electrode catalyst layer can be manufactured by applying a catalyst ink constituted by an electrode catalyst such as that described above, a polymer electrolyte, a solvent, and so on onto the solid polymer electrolyte membrane 30 using a well-known method such as a spraying method, a transfer method, a doctor blade method, or a die coater method.

The amount of catalyst ink applied to the solid polymer electrolyte membrane 30 should be set such that a catalyst action, in which the electrode catalyst induces an electrochemical reaction, can be exhibited sufficiently. More specifically, the catalyst ink is preferably applied such that a mass of the catalyst component per unit surface area lies within a range of 0.05 milligrams (mg)/cm$^2$ to 1mg/cm$^2$. The catalyst ink is preferably applied such that a thickness of the catalyst ink after drying is between 5$\mu$m and 30$\mu$m. The application amount and thickness of the catalyst ink do not have to be identical on the anode side and the cathode side and may be set at different values if necessary.

In the MEA 100, the thicknesses of the electrode catalyst layer, gas diffusion layer 10, and solid polymer electrolyte membrane 30 are preferably reduced to improve the fuel gas diffusion characteristic and so on, but when the thicknesses are too low, a sufficient electrode output cannot be obtained. Therefore, the thickness values should be determined such that the desired characteristics are obtained in the MEA 100.

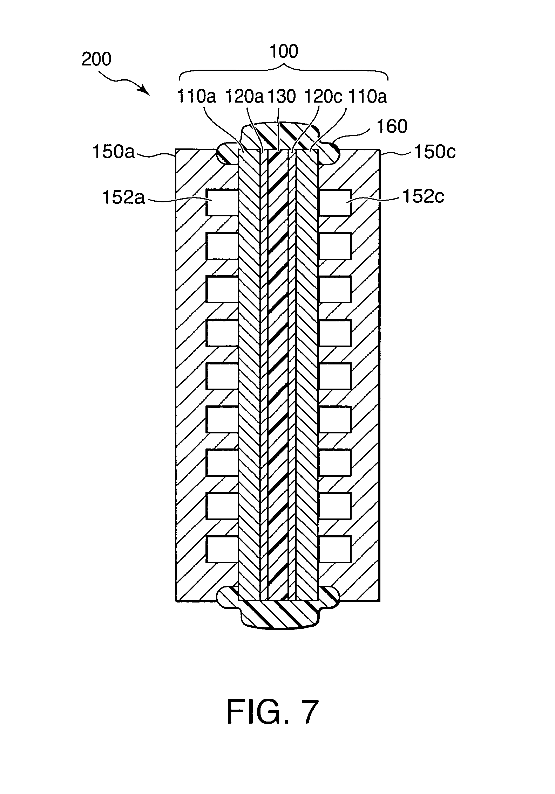

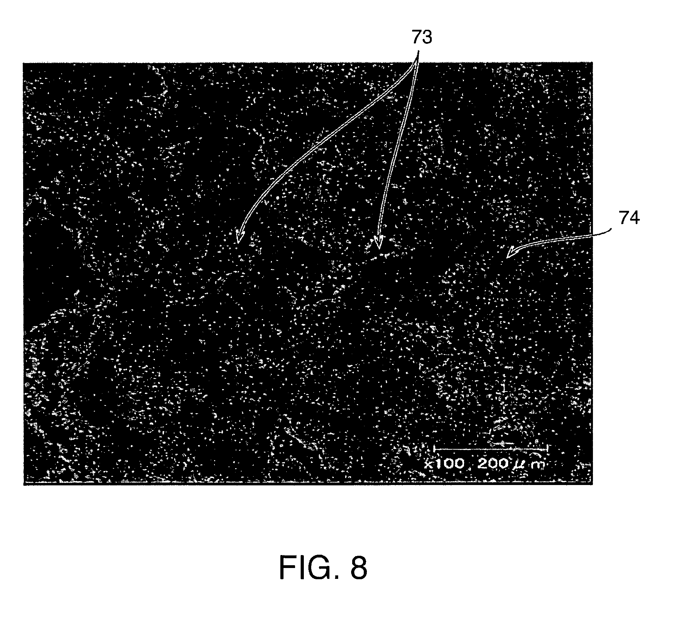

Next, referring to FIGs. 7 and 8, a fuel cell 200 according to this invention, which employs the gas diffusion layer 10 and the MEA 100 according to this invention, will be described.

The polymer electrolyte fuel cell 200 promotes the discharge of liquid water, thereby preventing flooding, during a fuel cell operation.

Referring to FIG. 7, the single fuel cell 200 is constituted by the MEA 100, an anode side separator 150a forming a fuel gas flow passage 152a, and a cathode side separator 150c including an oxidant gas flow passage 152c through which an oxidant gas flows.

The fuel gas flow passage 152a is formed in the anode side separator 150a so as to face the gas diffusion layer 10a. A coolant flow passage, not shown in the figure, through which a coolant flows is formed in a rear surface of the anode side separator 150a relative to the fuel gas flow passage 152a. The oxidant gas flow passage 152c is formed in the cathode side separator 150c so as to face the gas diffusion layer 10c. A gasket 160 carrying a gas diffusion electrode constituted by the gas diffusion layer 10a and an anode catalyst layer 20a and a gas diffusion electrode constituted by the gas diffusion layer 10c and a cathode catalyst layer 20c integrally is provided on a periphery of the polymer electrolyte fuel cell 200.

The fuel cell 200 including the MEA 100 exhibits a superior power generation performance. The constitutional members of the fuel cell 200 according to this invention will be described briefly below.

The separators 150a, 150c are electrically connected to respective cells when a plurality of the single polymer electrolyte fuel cells 200 are connected in series to form a fuel cell stack. The separators 150a, 150c also function as partition walls separating the fuel gas, the oxidant gas, and the coolant from each other. A well-known material, for example a carbon material such as compact carbon graphite or carbon plate or a metal such as stainless steel, may be used as the constitutional material of the separators 150a, 150c. There are no particular limitations on the thickness and size of the separators 150a, 150c and the shape and size of the gas flow passages and coolant passage.

The gasket 160 is disposed to surround an outer periphery of the MEA 100 in order to prevent the gas supplied to the anode catalyst layer 20a and the cathode catalyst layer 20c from leaking to the outside. There are no particular limitations on the constitutional material of the gasket 160, and a rubber material such as fluorine rubber, silicone rubber, ethylene propylene rubber (EPDM), or polyisobutylene rubber, a fluorine-based polymer material such as polytetrafluoroethylene (PTFE), polyvinylidene difluoride (PVDF), polyhexafluoropropylene, or tetrafluoroethylene - hexaflurorpropylene copolymer (FEP), or a thermoplastic resin such as polyolefin or polyester may be used. Furthermore, there are no particular limitations on the thickness of the gasket 160, but the thickness is preferably set within a range of 50$\mu$m and 2mm, and more preferably within a range of 100$\mu$m and 1mm.

As described above, the fuel cell according to this invention exhibits a superior power generation performance and great durability, and is therefore suitable for use as a power source for a vehicle from which a high output is required.

Next, first to fifth examples of the gas diffusion layer 10 according to this invention will be described.

First example

1. Manufacture of gas diffusion layer

Carbon black, PTFE, and carbon paper were used as the conductive microparticles, the binder particles, and the gas diffusion base material, respectively.

(1) Preparation of sintered body of carbon black and PTFE

(a) Preparation of carbon black/PTFE liquid dispersion

100g of carbon black (acetylene black, average particle diameter of primary particles: 46nm, manufactured by Denki Kagaku Kogyo), 960g of pure water, and 40g of non-ionic surfactant (Triton X-100, manufactured by The Dow Chemical Company) were mixed. The mixed liquid was dispersed in a jet mill until the average particle diameter of secondary particles (particles formed when the first particles coagulate) of the carbon black particles was $0.5\mu m$, whereby a carbon black liquid dispersion was obtained. A PTFE liquid dispersion (average particle diameter of PTFE particles: 250nm, AD-911, manufactured by Asahi Glass) was added and mixed into the carbon black liquid dispersion, whereby a carbon black/PTFE liquid dispersion having a 13% by weight solid content was obtained. The amount of added PTFE liquid dispersion was set such that PTFE corresponding to 40% by weight was contained in the carbon black/PTFE dispersion liquid relative to a 100% by weight solid content thereof.

(b) Solidification (electrodeposition)

The carbon black/PTFE liquid dispersion obtained as described above was placed in a migration electrodeposition tank and subjected to electrophoretic electrodeposition for three minutes at a tank voltage of 60V, whereby an electrodeposited solid having a thickness of 3mm was obtained. A platinum-coated titanium electrode was used as the migration electrodeposition anode, and nickel steel was used as the migration electrodeposition cathode.

(c) Formation of mixed sintered body

The electrodeposited solid was dried in a hot air drier for 15 minutes at 80°C. The dried object was then baked and sintered in an electrically heated sintering furnace for two hours at 360°C, whereby a mixed sintered body was obtained. The melting point of the PTFE serving as the binder particles is 327°C.

(2) Pulverization of sintered body

The mixed sintered body was pulverized in a pulverizer and then graded using a sieve to obtain a powder of carbon black and PTFE clusters with a particle diameter of $50\mu m$ to $150\mu m$.

(3) Manufacture of conductive microparticle layer 2

The powder was filled into a hot-pressing die and hot-pressed for 60 seconds at a pressure of $50kg/cm^2$ and under a temperature of 360°C, whereby a sheet-form sintered body was obtained. The sheet-form sintered body was set in a large microtome and sliced to a thickness of $50\mu m$ by a tungsten carbide blade, whereby the conductive microparticle layer 2 was obtained.

FIG. 8 shows a result obtained when the obtained conductive microparticle layer is observed using a scanning type electron microscope (SEM). As shown in FIG. 8, it was confirmed that the conductive microparticle layer 2 had a structure in which clusters of the carbon black and/or the PTFE were formed continuously and that innumerable first pores 3 were formed in the gaps between the clusters. It was also confirmed that innumerable second pores 4 were formed within the clusters of the carbon black and / or the PTFE.

It was possible to confirm from the above observation result that even when clusters of hard, compact carbon black and/or PTFE are filled into a die and hot-pressed, the binder and carbon particles inside the clusters do not migrate, and therefore the clusters themselves are not deformed so as to fill the gaps between the clusters. Furthermore, it was confirmed that the clusters are not reduced in particle size so as to form microparticles, and the first pores 3 and second pores 4 remain between the clusters and in the interior of the clusters, respectively. It was also confirmed that substantially no PTFE fibers were observed in the conductive microparticle layer 2.

(4) Joining of conductive microparticle layer 2 and base material layer 1

Carbon paper (TGP-H-060 manufactured by Toray, thickness: $200\mu m$) was prepared as the base material layer 1. The conductive microparticle layer 2 of (3) and the base material layer 1 were joined by hot-pressing, whereby the gas diffusion layer 10 was obtained. The hot-pressing was performed for 60 seconds at a pressure of $20kg/cm^2$ and under a temperature of 340°C.

### Second example

During preparation of the carbon black/PTFE liquid dispersion, the amount of PTFE liquid dispersion added to the carbon black liquid dispersion was set such that PTFE corresponding to 30% by weight was contained in the carbon black/PTFE dispersion liquid relative to a 100% by weight solid content thereof. Otherwise, the gas diffusion layer 10 was manufactured to the same specifications as the first example.

### Third example

During pulverization of the sintered body, the graded particle diameter of the sintered body was set at 25$\mu$m to 38$\mu$m. Otherwise, the gas diffusion layer 10 was manufactured to the same specifications as the first example.

### Fourth example

During pulverization of the sintered body, the graded particle diameter of the sintered body was set at 150$\mu$m to 250$\mu$m. Otherwise, the gas diffusion layer 10 was manufactured to the same specifications as the first example.

### Fifth example

During preparation of the carbon black/PTFE liquid dispersion in the jet mill, the average particle diameter of the secondary particles (the particles formed when the first particles coagulate) of the carbon black particles was set at 1$\mu$m. Otherwise, the gas diffusion layer 10 was manufactured to the same specifications as the first example.

Next, first to third comparative examples of a gas diffusion layer not pertaining to this invention will be described.

### First comparative example

An identical carbon black/PTFE liquid dispersion to that of the first example was prepared. The liquid dispersion was coated onto aluminum foil using a simple coater and then baked for two hours at 360°C to obtain a mixed sintered body.

The mixed sintered body was placed on carbon paper and joined thereto by hot-pressing. The hot-pressing was performed for 60 seconds at a pressure of 20kg/cm$^2$ and under a temperature of 340°C. The aluminum foil was then removed to obtain a gas diffusion layer.

### Second comparative example

During preparation of the carbon black/PTFE liquid dispersion, the amount of PTFE liquid dispersion added to the carbon black liquid dispersion was set such that PTFE corresponding to 60% by weight was contained in the carbon black/PTFE dispersion liquid relative to a 100% by weight solid content thereof. Otherwise, a gas diffusion layer was manufactured to the same specifications as the first example.

### Third comparative example

During pulverization of the sintered body, the graded particle diameter of the sintered body was set at 150$\mu$m to 180$\mu$m. Otherwise, a gas diffusion layer was manufactured to the same specifications as the first example.

The first to fifth examples and the first to third comparative examples described above were evaluated using a following method.

### Pore distribution measurement

Using the conductive microparticle layers obtained in the first to fifth examples and the first to third comparative examples, the pore distribution was measured by a half dry method employing a Perm-Porometer (manufactured by PMI).

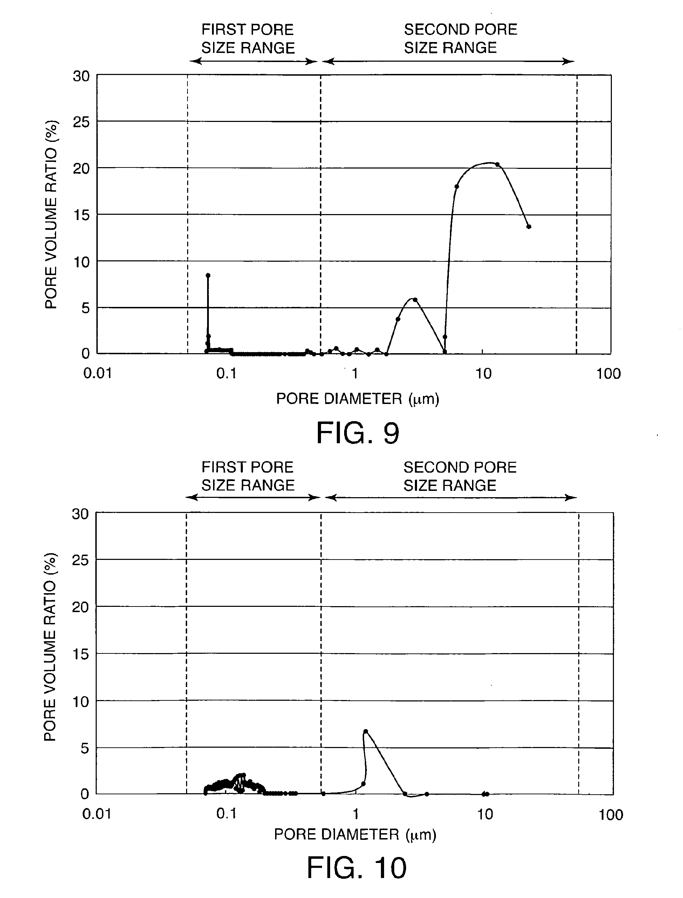

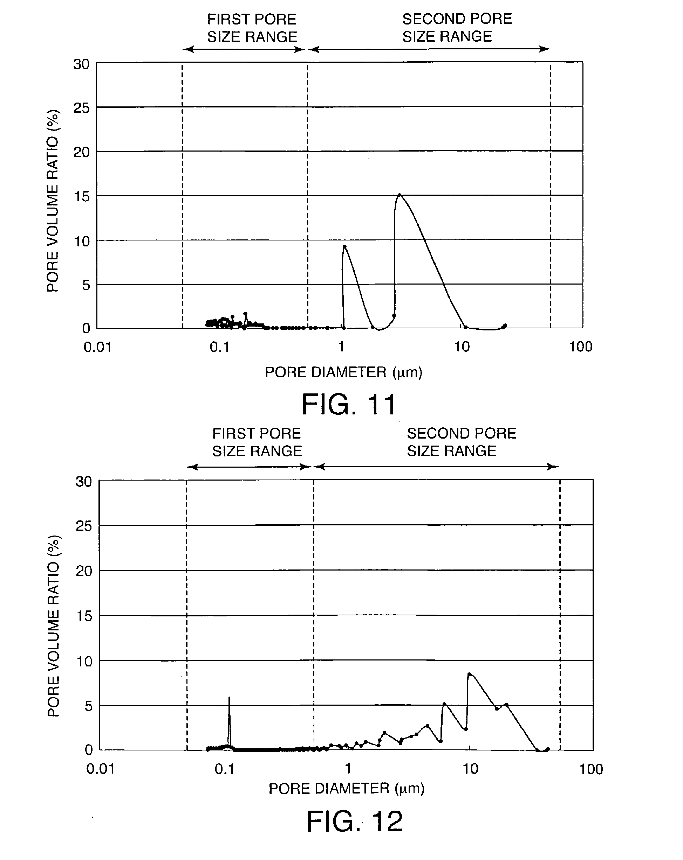

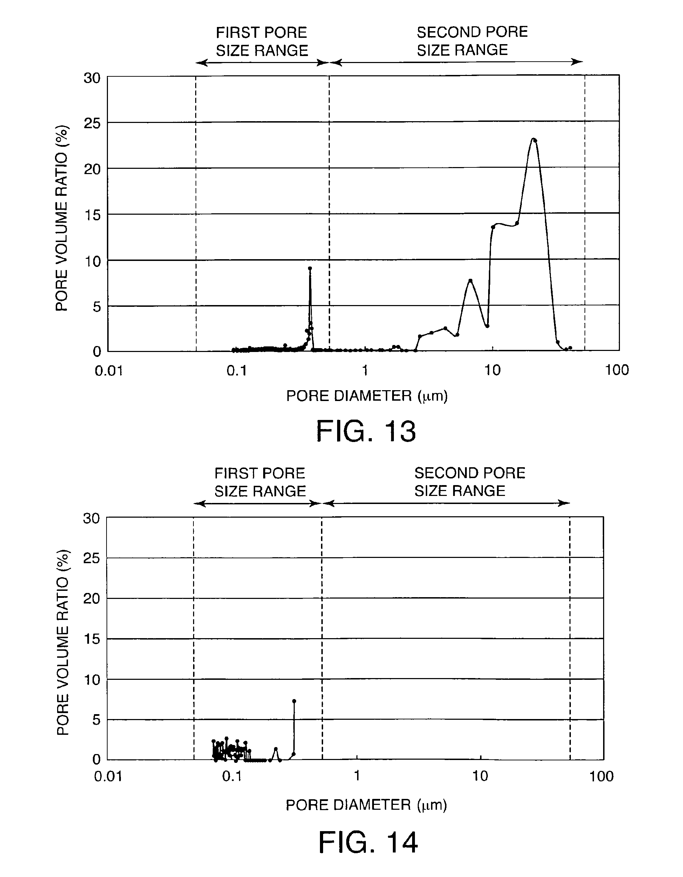

Measurement results are shown in Table 1 and FIGs. 9 to 16. Further, a peak range of the first pores 3 and the pore size $D1$ having the maximum volume ratio, a peak range of the second pores 4 and the pore size having the maximum volume ratio, and a pore volume ratio were determined from the pore distribution measurement results. The pore peak range is a surface area of a convex portion of the pore size peak, or in other words a pore size range including at least 50% of an integrated value of the pore size distribution curve. The pore volume ratio is a ratio of the volume of the second pores 4 to the total pore volume of the conductive microparticle layer. The pore volume of the second pores 4 was calculated by integrating the pore peak range.

TABLE-1

| | CONTACT ANGLE $\theta_1$ (°) | CONDUCTIVE MICROPARTICLE LAYER 2 | | | | | | PORES 11 IN THE BASE MATERIAL LAYER | | |
| | | FIRST PORES 3 | | | SECOND PORES 5 | | | | | |
| | | PEAK RANGE ($\mu$m) | D1 ($\mu$m) | F1 (kPa) | PEAK RANGE ($\mu$m) | PORE SIZE HAVING MAXIMUM VOLUME RATIO ($\mu$m) | PORE VOLUME RATIO (%) | CONTACT ANGLE $\theta_2$ (°) | D2 ($\mu$m) | F2 (kPa) |
|---|---|---|---|---|---|---|---|---|---|---|
| EXAMPLE #1 | 139 | 2-20 | 9.9 | -21.9 | 0.07-0.1 | 0.07 | 61.0 | 130 | 20 | -9.2 |
| EXAMPLE #2 | 135 | 1-3 | 1.2 | -169.5 | 0.07-0.2 | 0.12 | 92.2 | 130 | 20 | -9.2 |
| EXAMPLE #3 | 142 | 1-10 | 3.1 | -73.1 | 0.07-0.1 | 0.1 | 82.2 | 130 | 20 | -9.2 |
| EXAMPLE #4 | 143 | 5-40 | 12.2 | -18.8 | 0.07-0.2 | 0.11 | 84.5 | 130 | 20 | -9.2 |
| EXAMPLE #5 | 144 | 5-30 | 6.7 | -34.7 | 0.3-0.4 | 0.4 | 69.5 | 130 | 20 | -9.2 |
| COMPARATIVE EXAMPLE #1 | 126 | - | - | - | 0.07-0.4 | 0.3 | 100.0 | 130 | 20 | -9.2 |
| COMPARATIVE EXAMPLE #2 | 135 | 1-17 | 6.6 | -30.8 | 0.07 | 0.07 | 39.0 | 130 | 20 | -9.2 |
| COMPARATIVE EXAMPLE #3 | 134 | 5-40 | 27.4 | -7.3 | 0.07-0.1 | 0.1 | 82.5 | 130 | 20 | -9.2 |

From Table 1 and FIGs. 8A to 8H, peaks were confirmed respectively in the pore distribution of the first pores 3 and the pore distribution of the second pores 4 in the first to fifth examples and the second and third comparative examples, and it was confirmed that the conductive microparticle layer was formed with a large number of the first pores 3 in the first pore size range of 0.5$\mu$m to 50$\mu$m and a large number of the second pores 4 in the second pore size range of 0.05$\mu$m to 0.5$\mu$m. In the first comparative example, on the other hand, a pore size peak did not exist in the first pore size range, and only a large number of the second pores 4 were formed in the conductive microparticle layer in the second pore size range of 0.05$\mu$m to 0.5$\mu$m.

In the second example, a liquid dispersion containing 30% by weight of PTFE was used, and therefore the second pores 4 within the clusters were not filled, leading to an increase in the volume ratio of the second pores 4.

In the third comparative example, on the other hand, as shown in Table 1, the capillary force $F1$ of the first pores 3 was not within the prescribed range of this invention in relation to the capillary force $F2$ of the pores in the base material layer 1. In the second comparative example, a liquid dispersion containing 60% by weight of PTFE was used, and therefore the second pores 4 within the clusters were filled, causing the volume ratio of the second pores 4 to fall below the prescribed range of this invention.

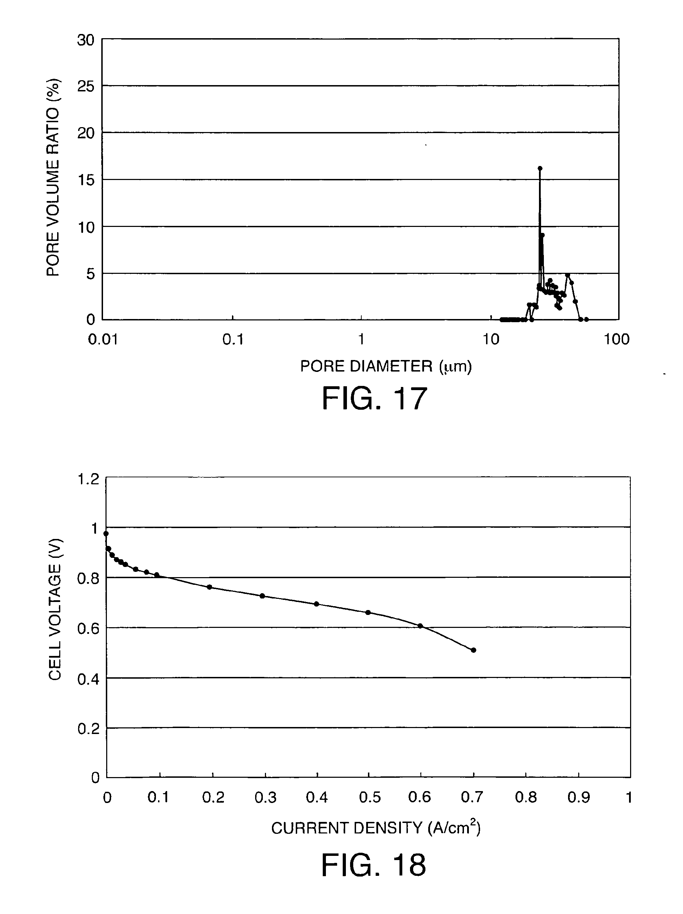

The pore size $D2$ having the maximum volume ratio of the pores 11 in the base material layer 1 was determined by measuring the pore distribution of the carbon paper (TGP-H-060 manufactured by Toray) used for the base material layer 1. The measurement results are shown in FIG. 17.

Measurement of contact angle

Using the conductive microparticle layers obtained in the first to fifth examples and the first to third comparative examples, the contact angle $\theta_1$ of the conductive microparticle layer was measured by a liquid drop method in which a water droplet was dropped onto the surface of the conductive microparticle layer and the angle of the water droplet was measured. The diameter of the water droplet used in the measurement was 12$\mu$m.

Using the same method, the contact angle $\theta_2$ of the carbon paper (TGP-H-060 manufactured by Toray) used as the base material layer was measured.

Table 1 shows the contact angles $\theta_1$, $\theta_2$ of the first to fifth examples and the first to third comparative examples.

The capillary forces $F1$ and $F2$ were calculated from the measured values of the pore size $D1$ of the pores having the maximum volume ratio of the first pores 3, the pore size $D2$ of the pores having the maximum volume ratio of the pores 11 in the base material layer 1, the contact angle $\theta_1$ of the conductive microparticle layer 2, and the contact angle $\theta_2$ of the base material layer 1. Here, 0.072 Newtons (N)/m, which is a value at 25°C, was used as the surface tension$\Upsilon$ of water. The calculation results are shown in Table 1.

It was confirmed from Table 1 that with regard to the gas diffusion layers 10 of the first to fifth examples, the capillary force $F1$ of the conductive microparticle layer 2 was smaller than the capillary force $F2$ of the base material layer 1. In the third comparative example, on the other hand, it was confirmed that the capillary force $F1$ of the conductive microparticle layer 2 was larger than the capillary force $F2$ of the base material layer 1.

Power generation evaluation

Using the respective gas diffusion layers manufactured in the first to fifth examples and the first to third comparative examples, membrane electrode assemblies (MEAs) were manufactured in the following sequence, whereupon the power generation performance of the MEAs was measured.

(1) Manufacture of electrode catalyst layer

A catalyst ink was prepared by mixing and dispersing platinum carrying carbon (TEC10E50E, manufactured by Tanaka Kikinzoku Kogyo Ltd., platinum content: 50% by weight), a solid polymer electrolyte fluid (NAFION solution DE520, manufactured by Du Pont, electrolyte content 5% by weight), pure water, and isopropyl alcohol at a mass ratio of 1:1:5:5 in a glass vessel disposed in a water bath set at 25°C for one hour using a homogenizer.

The catalyst ink was applied to one surface of a Teflon sheet using a screen printer and dried for six hours in the atmosphere at 25°C, whereby a catalyst layer containing 0.4mg of platinum per 1cm$^2$ surface area was formed on the Teflon sheet.

(2) Assembly of MEA and fuel cell

(1) Two of the electrode catalyst layers created in (1) were disposed on either side of a solid polymer electrolyte membrane formed from NAFION 211® and then hot-pressed under two megapascals (MPa) of pressure at a temperature of 130°C for ten minutes. The Teflon sheet was then peeled away, whereby an MEA was created.

Gas diffusion layers manufactured in advance were laminated onto both surfaces of the obtained MEA such that the base material layers faced outward, whereupon the laminated body was sandwiched by graphite separators and then by gold-plated stainless steel current collectors. Thus, a fuel cell for evaluation was created.

(3) Fuel cell evaluation

Using the respective fuel cells for evaluation according to the first to fifth examples and the first to third comparative examples, a power generation test was performed under the following conditions. The test was performed by supplying hydrogen to the anode at a flow rate of 1.25 times a theoretical value of a hydrogen flow rate and supplying air to the cathode at a flow rate 1.43 times a theoretical value of an air flow rate. The theoretical value is a hydrogen or oxygen flow rate required for a current to flow through the fuel cell. The relative humidity of an anode atmosphere and a cathode atmosphere during the test was 100%, and a temperature of the fuel cell was 50°C.

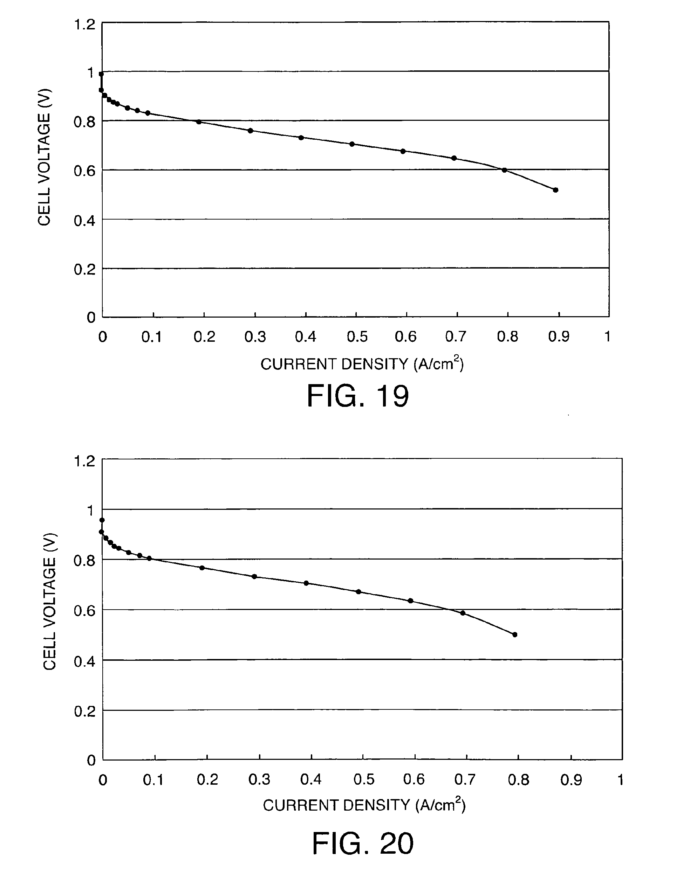

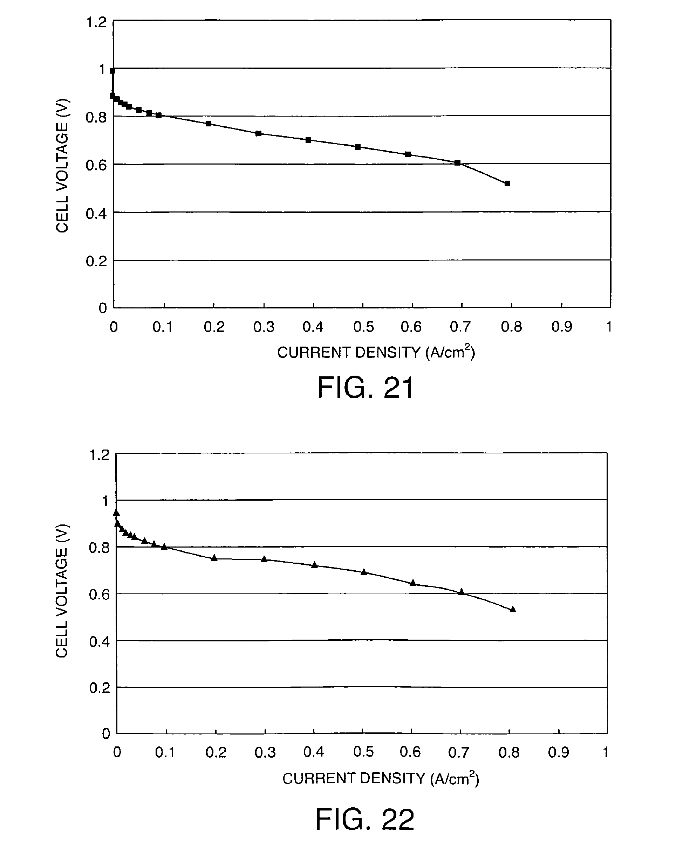

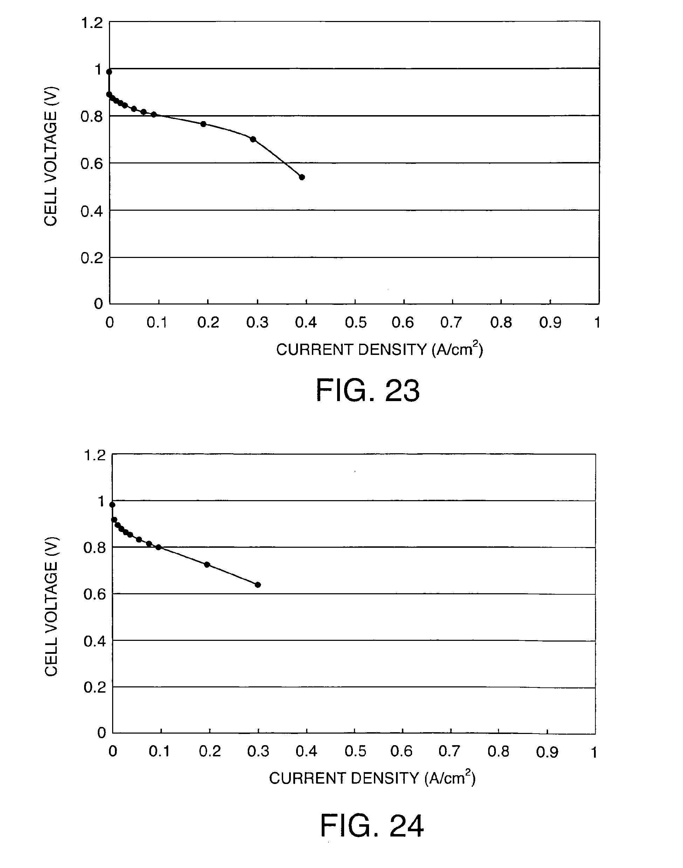

FIGs. 18 to 25 show power generation evaluation results. As shown in FIGs. 18 to 22, the fuel cells using the gas diffusion layers according to the first to fifth examples maintained a high voltage at a high current density even under high humidity conditions in which flooding is likely to occur, and therefore exhibited a favorable performance.

On the other hand, it was confirmed that in the fuel cell using the gas diffusion layer according to the first comparative example, the voltage decreased at a high current density, causing flooding. In the gas diffusion layer according to the first comparative example, the first pores 3 do not exist in the conductive microparticle layer, and therefore the water passages and gas passages are not separated. Hence, even when a large number of small diameter pores exist, gas dispersion cannot be achieved easily.

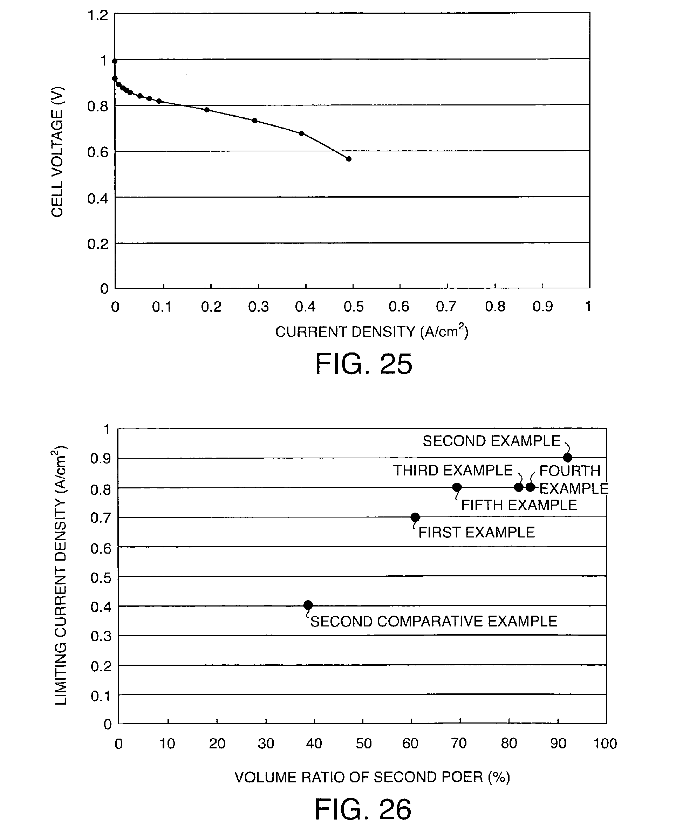

With regard to the fuel cells using the gas diffusion layers according to the first to fifth examples and the second comparative example, a limiting current density was determined from the diagrams shown in FIGs. 18 to 22 and FIG. 24. Further, the pore size having the maximum volume ratio of the second pores 4 was determined from FIGs. 9 to 13 and FIG. 15. FIG. 26 shows a combination of the limiting current density and the pore size having the maximum volume ratio of the second pores 4 determined in this manner.

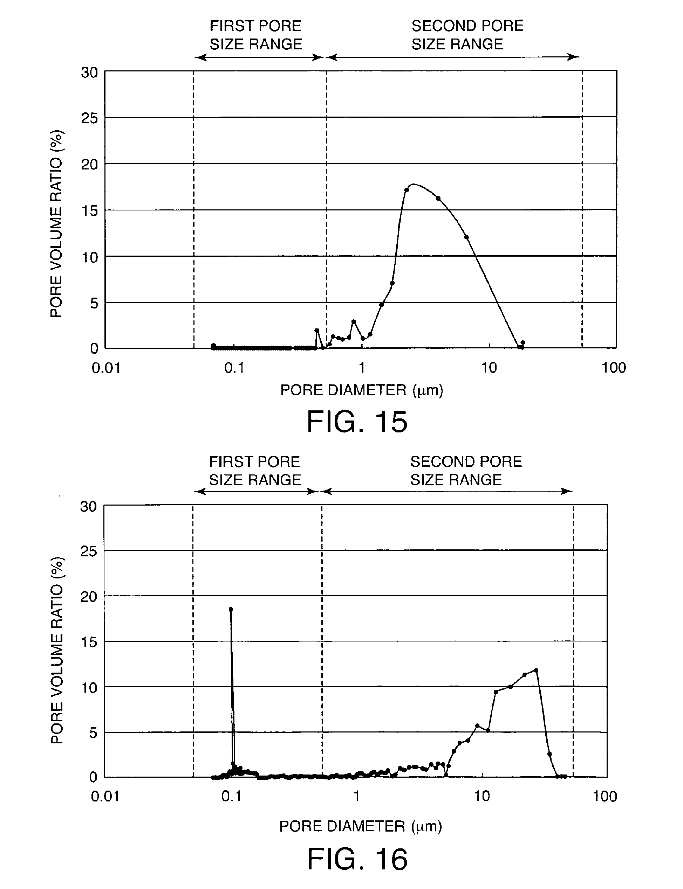

In the second comparative example, as shown in FIG. 15, although the first pores 3 and the second pores 4 are formed, the pore size having the maximum volume ratio of the second pores 4 is small. Therefore, in the fuel cell using the gas diffusion layer according to the second comparative example, it was confirmed that the voltage decreased at a high current density. Although the gas passages can be separated from the water passages in the second comparative example, the volume ratio of the second pores 4 for dispersing the gas is small, and therefore the voltage decreases at a high current density.

Referring to FIG. 26, it can be seen with regard to the first to fifth examples that the limiting current density increases as the volume ratio of the second pores 4 increases, leading to an improvement in the performance of the fuel cell. In the gas diffusion layers of the second to fifth examples, in which the volume ratio of the second pores 4 is larger than in the first example, an oxygen dispersion characteristic is greater than that of the gas diffusion layer according to the first example, leading to an increase in the limiting current density.

As shown in Table 1, although the first pores 3 and the second pores 4 are formed in the gas diffusion layer according to the third comparative example, the capillary force $F1$ of the conductive microparticle layer is greater than the capillary force $F2$ of the base material layer. Therefore, in the fuel cell using the gas diffusion layer according to the third comparative example, the voltage decreases at a high current density. Hence, even in a case where the gas passages are separated from the water passages and a sufficient volume ratio is secured with regard to the second pores 4 for diffusing the gas, as in the gas diffusion layer according to the third comparative example, if the capillary force $F1$ of the first pores 3 in the conductive microparticle layer is greater than the capillary force $F2$ of the pores in the base material layer, liquid water does not move easily from the conductive microparticle layer to the base material layer.

As described above, a fuel cell that uses the gas diffusion layer according to this invention, in which the pore size distribution, the contact angle, and the capillary force of the pores are limited, is capable of maintaining a high voltage without causing flooding at a high current density, in contrast to a fuel cell using a conventional gas diffusion layer. As a result, a favorable performance is exhibited as a fuel cell.

In the gas diffusion layer 10 according to this invention, an improvement in the drainage characteristic is achieved by forming the first pores 3 and the second pores 4 having different capillary forces in the conductive microparticle layer 2 such that the water passages are separated from the gas passages. Further, by making the capillary force of the first pores 3 smaller than the capillary force of the pores 11 in the base material layer 1, water movement from the conductive microparticle layer 2 to the base material layer 1 is promoted. Hence, the gas diffusion layer 10 according to this invention brings about a favorable effect in terms of preventing flooding in a fuel cell.

With regard to the above description, the contents of Tokugan 2008-247729, with a filing date of September 26, 2008 in Japan, and Tokugan 2009-148052, with a filing date of June 22, 2009 in Japan, are incorporated herein by reference.

Several specific embodiments of this invention were described above, but this invention is not limited to the above embodiments, and a person skilled in the art will be able to apply various amendments and modifications to these embodiments within the technical scope of the claims.

INDUSTRIAL APPLICABILITY

As described above, this invention brings about a favorable effect when applied to a polymer electrolyte fuel cell installed in a vehicle.

**Claims**

1. A gas diffusion layer (10) for a fuel cell, comprising a conductive microparticle layer (2) and a base material layer (1) that are laminated together,
   wherein the base material layer (1) comprises a plurality of pores (11) penetrating the base material layer in a lamination direction,
   the conductive microparticle layer (2) comprises a plurality of first pores (3) and a plurality of second pores (4) penetrating the conductive microparticle layer (2) in the lamination direction, the first pores (3) existing within a first pore size range of no less than 0.5 micrometers and no more than 50 micrometers and the second pores (4) existing within a second pore size range of no less than 0.05 micrometers and less than 0.5 micrometers,
   a total volume of the second pores (4) is no less than 50% and less than 100% of a total volume of all of the pores (3, 4) in the conductive microparticle layer (1), and
   a pore size $D1$ of pores having a maximum volume ratio from among the first pores (3) satisfies relationships of a following equation (A), a following equation (B), and a following equation (C):

$$F1 = 4 \cdot \gamma \cdot \cos \theta_1 \ / \ D1 \qquad\qquad (A)$$

$$F2 = 4 \cdot \gamma \cdot \cos \theta_2 \ / \ D2 \qquad\qquad (B)$$

$$F1 < F2 \qquad\qquad (C)$$

where

, $F1$ = a capillary force acting on the pores having the maximum volume ratio from among the first pores (3),
$F2$ = a capillary force acting on pores having a maximum volume ratio from among the pores (11) in the base material layer,
$\gamma$ = a surface tension of water,
$\theta_1$ = a contact angle between the conductive microparticle layer (2) and water,
$\theta_2$ = a contact angle between the base material layer (1) and water,
$D1$ = a pore size of the pores having a maximum volume ratio from among the first pores (3), and
$D2$ = a pore size of the pores having a maximum volume ratio of the pores (11) in the base material layer.

2. The gas diffusion layer (10) for a fuel cell as defined in Claim 1, wherein the conductive microparticle layer (2) includes a plurality of clusters (51) constituted by carbon particles (55) and binder particles (56),
   the first pores (3) are formed between the plurality of clusters (51), and
   the second pores (4) are formed inside the respective clusters (51) between the carbon particles (55), between the carbon particles (55) and the binder particles (51), or between the binder particles (55).

3. The gas diffusion layer (10) for a fuel cell as defined in Claim 2, wherein the binder particles (56) are polytetrafluoroethylene particles.

4. A membrane electrode assembly (100) comprising the gas diffusion layer (10) for a fuel cell as defined in any of Claim 1 to Claim 3.

5. A fuel cell (200) comprising the membrane electrode assembly (100) as defined in Claim 4.

6. A manufacturing method for manufacturing a gas diffusion layer for a fuel cell that includes a conductive microparticle layer and a base material layer, comprising:

a first step for mixing together and baking carbon particles and binder particles to obtain a sintered body (66) of the carbon particles and the binder particles;
a second step for pulverizing the sintered body to obtain a powder (67);
a third step for processing the powder (67) into a sheet form to obtain the conductive microparticle layer (72); and
a fourth step for joining the conductive microparticle layer (72) to the base material layer (71).

7. The manufacturing method for manufacturing a gas diffusion layer for a fuel cell as defined in Claim 6, wherein the first step comprises a step of obtaining the sintered body using a migration electrodeposition method.

8. The manufacturing method for manufacturing a gas diffusion layer for a fuel cell as defined in Claim 6 or Claim 7, wherein the binder particles are polytetrafluoroethylene particles.

FIG. 1

FIG. 2

FIG. 3

FIG. 4

FIG. 5

FIG. 6

FIG. 7

FIG. 8

FIG. 9

FIG. 10

FIG. 11

FIG. 12

FIRST PORE
SIZE RANGE

SECOND PORE
SIZE RANGE

FIG. 13

FIRST PORE
SIZE RANGE

SECOND PORE
SIZE RANGE

FIG. 14

FIG. 15

FIG. 16

FIG. 17

FIG. 18

FIG. 19

FIG. 20

FIG. 21

FIG. 22

FIG. 23

FIG. 24

FIG. 25

FIG. 26

| | | |
|---|---|---|
| **INTERNATIONAL SEARCH REPORT** | | International application No. |
| | | PCT/JP2009/066716 |

**A. CLASSIFICATION OF SUBJECT MATTER**
*H01M4/86*(2006.01)i, *H01M4/88*(2006.01)i, *H01M4/96*(2006.01)i, *H01M8/10* (2006.01)n

According to International Patent Classification (IPC) or to both national classification and IPC

**B. FIELDS SEARCHED**

Minimum documentation searched (classification system followed by classification symbols)
H01M4/86, H01M4/88, H01M4/96, H01M8/10

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2009 |
| Kokai Jitsuyo Shinan Koho | 1971–2009 | Toroku Jitsuyo Shinan Koho | 1994–2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2007-242378 A (University of Yamanashi),<br>20 September 2007 (20.09.2007),<br>paragraphs [0014] to [0126]; fig. 1 to 8<br>(Family: none) | 6-8<br>1-5 |
| Y<br>A | JP 2007-234469 A (Toshiba Fuel Cell Power<br>Systems Corp.),<br>13 September 2007 (13.09.2007),<br>paragraphs [0058] to [0061]; fig. 5, 6<br>(Family: none) | 6-8<br>1-5 |
| A | JP 2007-207486 A (Nissan Motor Co., Ltd.),<br>16 August 2007 (16.08.2007),<br>entire text<br>(Family: none) | 1-8 |

| ☒ Further documents are listed in the continuation of Box C. | ☐ See patent family annex. |
|---|---|

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 07 December, 2009 (07.12.09) | 15 December, 2009 (15.12.09) |

| Name and mailing address of the ISA/<br>Japanese Patent Office | Authorized officer |
|---|---|
| Facsimile No. | Telephone No. |

Form PCT/ISA/210 (second sheet) (April 2007)

**INTERNATIONAL SEARCH REPORT**

| International application No. |
| --- |
| PCT/JP2009/066716 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2001-57215 A  (Toshiba Corp.),<br>27 February 2001 (27.02.2001),<br>entire text<br>(Family: none) | 1-8 |
| A | JP 2006-19128 A  (Nissan Motor Co., Ltd.),<br>19 January 2006 (19.01.2006),<br>entire text<br>(Family: none) | 1-8 |
| P,A | JP 2008-300325 A  (Toyota Motor Corp.),<br>11 December 2008 (11.12.2008),<br>entire text<br>(Family: none) | 1-8 |

Form PCT/ISA/210 (continuation of second sheet) (April 2007)

<table>
<tr><td rowspan="2" style="text-align:center"><strong>INTERNATIONAL SEARCH REPORT</strong></td><td>International application No.</td></tr>
<tr><td>PCT/JP2009/066716</td></tr>
</table>

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
   The common matter between the inventions of claims 1-5 and the inventions of claims 6-8 is "a gas diffusion layer for a fuel cell, which comprises a laminated conductive microparticle layer and a base layer". However, as a result of the search, it is found that the matter is disclosed in JP 2007-242378 A, JP 2007-207486 A and JP 2001-57215 A and is therefore not novel.
   Consequently, between the inventions of claims 1-5 and the inventions of claims 6-8, there is no special technical feature for so linking these groups of inventions to each other as to form a single general inventive concept, and it is obvious that the inventions of claims 1-5 and the inventions of claims 6-8 do not comply with the requirement of unity of invention.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001057215 A
- JP 2008247729 A
- JP 2009148052 A